# EUROPÄISCHE PATENTSCHRIFT

(11) **EP 3 461 358 B1**
(45) Veröffentlichungstag und Bekanntmachung des Hinweises auf die Patenterteilung: **26.08.2020**
(21) Anmeldenummer: 17194421.8
(22) Anmeldetag: 02.10.2017
(51) Int. Cl.: A43B 7/08, B29D 35/14

(54) **VERFAHREN ZUR HERSTELLUNG EINES SCHUHS MIT EINER LUFTPUMPVORRICHTUNG MIT EINEM IN EINER ZWISCHENSOHLE AUSGEBILDETEN BALG**
METHOD FOR PRODUCING A SHOE WITH AN AIR PUMP DEVICE WITH A BELLOWS IN A MIDDLE SOLE
PROCÉDÉ DE FABRICATION D'UNE CHAUSSURE POURVUE D'UN DISPOSITIF DE POMPE À AIR POURVU D'UN SOUFFLET CONÇU DANS UNE SEMELLE INTERCALAIRE

(43) Veröffentlichungstag der Anmeldung: 03.04.2019
(73) Patentinhaber: ATMOS airwalk ag, 8152 Zürich, Glattbrugg (CH)
(72) Erfinder: MÖHLMANN, Wilhelm, 8152 Zürich, Glattbrugg (CH); SCHMIDT, Jens, 66957 Obersimten (DE)
(74) Vertreter: Zenz Patentanwälte Partnerschaft mbB

(56) Entgegenhaltungen:
- EP-A1- 1 857 001
- EP-A1- 2 298 099
- EP-A1- 2 901 879
- WO-A1-01/82732

## Beschreibung

Die Erfindung betrifft ein Verfahren zur Herstellung eines Schuhs mit einer im Fersenbereich angeordneten Luftpumpvorrichtung mit wenigstens einem Balg, in welchen wenigstens ein Luftansaugkanal mündet und mit dem wenigstens ein in den Schuhinnenraum mündender Luftführungskanal verbunden ist, wobei ein Schaft mit einem Obermaterialabschnitt und einem Sohlenabschnitt mit einer Unterseite, eine Zwischensohle mit einer Oberseite und einer Unterseite und eine Laufsohle mit einer Oberseite bereitgestellt werden, wobei die Zwischensohle eine Ausnehmung zur Ausbildung wenigstens eines Hohlraums für den wenigstens einen Balg der Luftpumpvorrichtung aufweist, wobei der Schaft, die Zwischensohle und die Laufsohle miteinander verbunden werden, indem entweder zunächst die Unterseite des Sohlenabschnitts des Schafts mit der Oberseite der Zwischensohle und dann der Verbund aus Schaft und Zwischensohle mit der Laufsohle verbunden wird oder zunächst die Unterseite der Zwischensohle mit der Oberseite der Laufsohle und dann der Verbund aus Zwischen- und Laufsohle mit dem Schaft verbunden wird.

Aus den früheren Anmeldungen EP 2 218 348 A1, WO 2012/126489 A1 und EP 3 078 288 A1 sind diverse Gestaltungen von Schuhen bekannt, die eine im Fersenbereich des Schuhs angeordnete Luftpumpvorrichtung mit wenigstens einem Balg aufweisen und bei denen ein Luftansaugkanal in den Balg mündet und mit dem Balg wenigstens ein in den Schuhinnenraum mündender Luftführungskanal verbunden ist. Bei einem in der EP 2 218 348 A1 beschriebenen Ausführungsbeispiel ist eine Zwischensohle aus einem kompressiblen Material zwischen einer harten Laufsohle und einer ebenfalls härteren Decksohle angeordnet, wobei in der Zwischensohle im Fersenbereich ein Hohlraum zur Aufnahme eines Balgs der Luftpumpvorrichtung eingelassen sein kann. Aus der WO 2012/126489 A1 ist ein Schuh mit einer Luftpumpvorrichtung in einer Sohlenkonstruktion bekannt, bei dem die Sohlenkonstruktion einen unteren Laufsohlenteil und einen oberen Sohlenteil umfasst, wobei der Balg der Luftpumpvorrichtung im Wesentlichen in dem oberen Sohlenteil in einem Hohlraum, der oben und seitlich von dem oberen Sohlenteil und unten von dem Laufsohlenteil begrenzt ist, ausgebildet ist. Die beschriebene Sohlenkonstruktion soll beispielsweise durch Kunststoffspritzen aus einem elastischen Material hergestellt werden.

Aus der WO 01/82732 A1 ist ein Herstellungsverfahren für einen Schuh bekannt, bei dem eine Sohle mit einem daran befestigten Schaft und eine Einlegesohle bereitgestellt werden und die Einlegesohle auf der Oberseite der Sohle derart positioniert wird, dass zwei "Schaftverzahnungsabschnitte" aufeinander einrasten. Die Einlagesohle weist an der Unterseite Hohlräume und Kanäle einer Luftpumpvorrichtung auf, wobei die Kanäle über Durchgangsöffnungen mit der Oberseite der Einlegesohle und so mit dem Schuhinnenraum verbunden sind. Komprimierbare Vorsprünge an der Unterseite der Einlegesohle werden beim Auftreten zusammengedrückt, so dass die in den Hohlräumen befindliche Luft durch die Durchgangsöffnungen zur Fußsohle hin ausgepresst wird.

Aus der EP 3 078 288 A1 ist ein Verfahren zum Herstellen eines Schuhs mit einer Luftpumpvorrichtung bekannt, bei dem ein vormontierter Schaft mit einer perforierten Brandsohle, diverse Bestandteile einer Luftpumpvorrichtung (nämlich Balg, Luftansaugkanal und Luftführungen mit Einwegventilen) und eine einteilige Sohlenkonstruktion bereitgestellt werden und dann der Schaft mit der einteiligen Sohlenkonstruktion derart (beispielsweise durch Kleben) verbunden wird, dass die Bestandteile der Luftpumpvorrichtung in Aussparungen der einteiligen Sohlenkonstruktion zwischen dieser Sohlenkonstruktion und der Brandsohle positioniert werden. Bei einer beschriebenen Ausführungsform soll die einteilige Sohlenkonstruktion an die Unterseite der Brandsohle, an der zuvor die Bestandteile der Luftpumpvorrichtung befestigt worden sind, angespritzt werden. Nachteilig ist hierbei der Herstellungsaufwand, insbesondere der Aufwand, der erforderlich ist, um ein Zusammenpressen der die Bestandteile der Luftpumpvorrichtung aufnehmenden Hohlräume aufgrund des Spritzdrucks zu vermeiden.

Ausgehend von diesem Stand der Technik ist es Aufgabe der Erfindung, ein kostengünstiges Herstellungsverfahren zu schaffen, das einerseits die Vorteile eines Verbindens der Sohlenkonstruktion mit dem Schaft mittels Spritzgusstechnik nutzt, aber andererseits eine Einbringung der Luftpumpvorrichtung ohne einen erheblichen Zusatzaufwand ermöglicht.

Diese Aufgabe wird erfindungsgemäß durch ein Verfahren mit den Merkmalen des Anspruchs 1 gelöst. Bei diesem Verfahren zur Herstellung eines Schuhs mit einer im Fersenbereich angeordneten Luftpumpvorrichtung mit wenigstens einem Balg, in welchen wenigstens ein Luftansaugkanal mündet und mit dem wenigstens ein in den Schuhinnenraum mündender Luftführungskanal verbunden ist, werden ein Schaft mit einem Obermaterialabschnitt und einem Sohlenabschnitt mit einer Unterseite, eine Zwischensohle mit einer Oberseite und einer Unterseite und eine Laufsohle mit einer Oberseite bereitgestellt, wobei
- entweder die Unterseite der Zwischensohle eine Oberfläche mit einem ersten Oberflächenprofil und wenigstens eine an diese Oberfläche angrenzende Ausnehmung zur Ausbildung wenigstens eines Hohlraums für den wenigstens einen Balg der Luftpumpvorrichtung aufweist, und die Oberseite der Laufsohle eine Oberfläche mit einem zweiten Oberflächenprofil aufweist, das zu dem ersten Oberflächenprofil zumindest teilweise derart komplementär ist, dass die komplementären Oberflächenbereiche des zweiten Oberflächenprofils der Laufsohle und des ersten Oberflächenprofils der Zwischensohle die wenigstens eine Ausnehmung allseitig umgeben,
- oder die Oberseite der Zwischensohle eine Oberfläche mit einem ersten Oberflächenprofil und wenigstens eine an diese Oberfläche angrenzende Ausnehmung zur Ausbildung wenigstens eines Hohlraums für den wenigstens einen Balg der Luftpumpvorrichtung aufweist, und die Unterseite des Sohlenabschnitts des Schafts eine Oberfläche mit einem zweiten Oberflächenprofil aufweist, das zu dem ersten Oberflächenprofil zumindest teilweise derart komplementär ist, dass die komplementären Oberflächenbereiche des zweiten Oberflächenprofils des Sohlenabschnitts und des ersten Oberflächenprofils der Zwischensohle die wenigstens eine Ausnehmung allseitig umgeben,
   wobei die horizontale Ausdehnung der Oberseite der Laufsohle und die horizontale Ausdehnung des Sohlenabschnitts des Schafts größer sind als die horizontale Ausdehnung der Zwischensohle, so dass die Zwischensohle derart zentriert zwischen der Laufsohle und dem Schaft positioniert werden kann, dass die Laufsohle und der Schaft den Außenrand der Zwischensohle allseitig überragen. Zum Verbinden des Schafts, der Zwischensohle und der Laufsohle wird zunächst entweder die Zwischensohle zentriert auf die Unterseite des Sohlenabschnitts des Schafts aufgebracht und der Schaft mit der aufgebrachten Zwischensohle auf die Oberseite der Laufsohle gedrückt, wobei die Laufsohle zuvor in einem Bodenelement einer Spritzgießform bereitgestellt wird, oder die Zwischensohle zentriert auf die Oberseite der Laufsohle und die Laufsohle mit der aufgebrachten Zwischensohle auf die Unterseite des Schafts aufgebracht. Dabei werden die komplementären Oberflächenbereiche des ersten Oberflächenprofils der Oberseite bzw. der Unterseite der Zwischensohle und des zweiten Oberflächenprofils der Unterseite des Sohlenabschnitts bzw. der Oberseite der Laufsohle verklebt, so dass der wenigstens eine Hohlraum der wenigstens einen Ausnehmung vollständig umschlossen ist. Danach werden der Schaft, die Zwischensohle und die Laufsohle von einer Spritzgießform umschlossen und die nicht von der Zwischensohle abgedeckten Oberflächenbereiche der Oberseite der Laufsohle, die seitlichen Außenflächen der Zwischensohle und die Unterseite und angrenzende seitliche Oberflächenbereiche des Schafts mit einem Randsohlenbereich-Kunststoff umspritzt, um unter Ausbildung eines Randsohlenbereichs die Laufsohle, die Zwischensohle und den Schaft miteinander zu verbinden.

Unter einem "Balg" soll hier ein Luft aufnehmender, von Wandungen umschlossener elastisch komprimierbarer Hohlraum verstanden werden, der bei seiner Kompression Luft über einen angekoppelten Luftführungskanal ausstößt, und der bei anschließender Expansion Luft über einen Luftansaugkanal ansaugt. Die den Hohlraum des Balgs umschließenden Wandungen könnten von den Wandungen einer in der Ausnehmung eingebrachten Kunststoffblase gebildet werden; werden aber vorzugsweise von den Wandungen der den Hohlraum begrenzenden Ausnehmung der Zwischensohle und entweder der Unterseite des die Ausnehmung überdeckenden Sohlenabschnitts des Schafts oder der Oberseite der die Ausnehmung überdeckenden Laufsohle selbst gebildet. Der "Sohlenabschnitt" des Schafts stellt den der Laufsohle zugewandten Teil des Schafts dar, der vorzugsweise eine Brandsohle umfasst oder aus der Brandsohle besteht. Die Begriffe Oberseite und Unterseite beziehen sich auf die Lage der so bezeichneten Seiten während der normalen Trageposition des Schuhs. Wenn davon gesprochen wird, dass das erste Oberflächenprofil und das zweite Oberflächenprofil zumindest "teilweise" komplementär sind, so meint dies, dass die beiden Oberflächenprofile zumindest in einander gegenüberliegend angeordneten Teilflächen ihrer Gesamtfläche komplementär sind, so dass sie beim Aufeinanderliegen in diesen Teilflächen ganzflächig aneinander anliegen. Wenn ausgehend von diesem Verständnis ferner angegeben ist, dass die komplementären Oberflächenbereiche die wenigstens eine Ausnehmung "allseitig umgeben", so bedeutet dies, dass die aneinander anliegenden Teilflächen diese Ausnehmung bzw. Ausnehmungen derart umgeben, dass der Hohlraum der Ausnehmung bzw. Ausnehmungen vollständig von den Wandungen der die komplementären Oberflächenbereiche aufweisenden Bestandteile des Schuhs (entweder Zwischensohle und Laufsohle oder Zwischensohle und Sohlenabschnitt des Schafts) umschlossen ist. Eine Ausnahme hiervon bilden lediglich die Öffnungen des Balgs zu den Luftansaug- und Luftführungskanälen.

Das erfindungsgemäße Verfahren, bei dem der Schuh aus drei vorgefertigten Sohlenkomponenten hergestellt wird, die zum Verbinden mit einer vierten Komponente umspritzt werden, hat mehrere Vorteile. Die Ausbildung des Balg-Hohlraums der Luftpumpvorrichtung mittels einer einseitig offenen Ausnehmung einer vorgefertigten Zwischensohle vereinfacht die Herstellung der Luftpumpvorrichtung. Das Verschließen des von der Ausnehmung gebildeten Hohlraums durch eine auf komplementären Oberflächen angeklebte zweite Sohlenkomponente vor dem Umspritzen ermöglicht einen einfach herzustellenden Schutz des Hohlraums der Luftpumpvorrichtung vor unerwünschter Kompression durch den Spritzdruck während des Umspritzens und vor einem Eindringen des noch flüssigen Kunststoffs. Das erfindungsgemäße Verfahren gestattet eine einfache Gestaltung der Bestandteile der Luftpumpvorrichtung und eine Vorfertigung und Vormontage dieser Bestandteile in den Sohlenkomponenten. Es erlaubt ferner die Auswahl der geeigneten Sohlenwerkstoffe für die Sohlenkomponenten in Abhängigkeit von ihrer jeweiligen Funktion.

Vorzugsweise wird der Spritzdruck im Schritt b) in Abhängigkeit von dem Material der Zwischensohle so gewählt, dass der wenigstens eine Hohlraum der wenigstens einen Ausnehmung nicht oder nur unwesentlich komprimiert wird.

Bei einer bevorzugten Ausführungsform wird im Schritt a1-1) bzw. im Schritt a2-2) der Schaft auf einem Leisten so positioniert, dass die Unterseite des Sohlenabschnitts nach oben weist. Dies vereinfacht die Kontrolle eines korrekten Positionierens der Zwischensohle auf der Unterseite des Sohlenabschnitts durch einen Bediener.

Bei einer bevorzugten Weiterbildung des Verfahrens wird im Schritt a1-1) bzw. im Schritt a2-1) die Zwischensohle zentriert aufgebracht, indem sie mit Hilfe von Markierungen oder Vorsprüngen auf der Unterseite des Sohlenabschnitts des Schafts bzw. auf der Oberseite der Laufsohle positioniert wird. Dies dient der Erleichterung des richtigen Positionierens der Zwischensohle.

Eine bevorzugte Variante des Verfahrens ist dadurch gekennzeichnet, dass ein Schaft bereitgestellt wird, der einen sich ausgehend von dem Sohlenabschnitt entlang seines Obermaterialabschnitts erstreckenden ersten Luftansaugkanal mit einer beabstandet vom Sohlenabschnitt angeordneten Luftansaugöffnung und einem an dem Sohlenabschnitt angeordneten ersten Verbindungselement aufweist, eine Zwischensohle bereitgestellt wird, die an ihrer Oberseite ein mit einem zweiten Luftansaugkanal der Luftpumpvorrichtung verbundenes zweites Verbindungselement aufweist, und die Schritte a1-1) und a1-2) ausgeführt werden, wobei im Schritt a1-1) das erste und das zweite Verbindungselement miteinander verbunden werden, um den zweiten Luftansaugkanal der Zwischensohle mit dem ersten Luftansaugkanal des Schafts zu verbinden. Diese Aufteilung der Komponenten des Luftansaugkanals und deren Vormontage am Schaft und der Zwischensohle gestattet eine vereinfachte Handhabung und schnellere Montage beim Verbinden der Komponenten des Schuhs. Vorzugsweise wird hierbei ein Schaft bereitgestellt, der einen sich entlang seines Fersenbereichs erstreckenden ersten Luftansaugkanal aufweist.

Eine erste Ausführungsform des Verfahrens ist dadurch gekennzeichnet, dass die Oberseite der Zwischensohle die Oberfläche mit dem ersten Oberflächenprofil und die Unterseite des Sohlenabschnitts des Schafts die Oberfläche mit dem zweiten Oberflächenprofil aufweist, so dass die komplementären Oberflächenbereiche des ersten Oberflächenprofils der Oberseite der Zwischensohle und des zweiten Oberflächenprofils der Unterseite des Sohlenabschnitts im Schritt a1-1) verklebt werden. Bei dieser Ausführungsform ist somit die wenigstens eine Ausnehmung der Zwischensohle zum Sohlenabschnitt des Schafts hin, also an der Oberseite der Zwischensohle offen.

Bei dieser ersten Ausführungsform des Verfahrens kann der Sohlenabschnitt des Schafts vorzugsweise eine Brandsohle umfassen, die im Fersenbereich über der den wenigstens einen Balg der Luftpumpvorrichtung enthaltenden wenigstens einen Ausnehmung verstärkt und als biegesteife Druckplatte ausgebildet ist, die die wenigstens eine Ausnehmung überdeckt. Diese verbessert die Kompression des durch die Ausnehmung gebildeten Hohlraums.

Eine zweite Ausführungsform des Verfahrens ist dadurch gekennzeichnet, dass die Unterseite der Zwischensohle die Oberfläche mit dem ersten Oberflächenprofil und die Oberseite der Laufsohle die Oberfläche mit dem zweiten Oberflächenprofil aufweist, so dass die komplementären Oberflächenbereiche des ersten Oberflächenprofils der Unterseite der Zwischensohle und des zweiten Oberflächenprofils der Oberseite der Laufsohle im Schritt a1-2) verklebt werden, wenn der Schaft mit der aufgebrachten Zwischensohle auf die Oberseite der Laufsohle gedrückt wird. Bei dieser Ausführungsform ist somit die wenigstens eine Ausnehmung der Zwischensohle zur Laufsohle hin, also an der Unterseite der Zwischensohle offen.

Bei dieser zweiten Ausführungsform des Verfahrens kann im Schritt a1-1) die Zwischensohle auf die Unterseite des Sohlenabschnitts des Schafts aufgeklebt werden. Da bei dieser Ausführungsform die Ausnehmung zur Laufsohle hin offen ist, kommt es beim Aufkleben der Zwischensohle auf die Unterseite des Sohlenabschnitts des Schafts weder auf eine ganzflächiges Verkleben noch darauf an, das die miteinander verklebten Oberflächen komplementäre Profile aufweisen. Dieses Kleben dient nur dem Fixieren der Zwischensohle am Schaft vor dem Umspritzen. Dabei ist allerdings auf eine korrekte Positionierung der Zwischensohle auf der Unterseite des Sohlenabschnitts des Schafts zu achten, damit anschließend im Schritt a1-2) die am Schaft befestigte Zwischensohle mit der wenigstens einen nach unten offenen Ausnehmung korrekt auf der Laufsohle positioniert werden kann, so dass die komplementären Oberflächenbereiche des zweiten Oberflächenprofils der Laufsohle und des ersten Oberflächenprofils der Zwischensohle aufeinander aufliegen.

Vorzugsweise wird die Laufsohle in dem Bodenelement der Spritzgießform bereitgestellt, indem die Laufsohle in dem Bodenelement durch Spritzgießen oder Gießen hergestellt wird. Somit kann bei dem Vorfertigen der Laufsohle ein Teil derselben Vorrichtung verwendet werden.

Bei einer bevorzugten Ausführungsform des Verfahrens wird eine Laufsohle bereitgestellt, die derart allseitig über den Außenrand der Zwischensohle übersteht, dass der Abstand zwischen dem Außenrand der Laufsohle und dem Außenrand der Zwischensohle zwischen 5 % und 20 % der Länge des Schuhs liegt. Dieser Bereich stellt ein Optimum dar beim Erreichen sich widersprechender Anforderungen, nämlich einerseits der Forderung nach einer ein maximales Pumpvolumen gestattenden maximalen horizontalen Ausdehnung der Ausnehmung und somit der Zwischensohle und andererseits der Forderung nach einem möglichst breiten Randsohlenbereich zum Erreichen einer stabilen und dauerhaften Verbindung zwischen der Laufsohle und dem Schaft.

Eine bevorzugte Weiterbildung des Verfahrens ist dadurch gekennzeichnet, dass eine Zwischensohle bereitgestellt wird, die aus einem Kunststoffschaum mit einer Shore-A-Härte zwischen 40 und 60 Shore besteht. Es hat sich gezeigt, dass bei Einhalten dieses Härte-Bereichs einerseits eine ausreichende Kompressibilität zum Erzielen einer möglichst vollständigen Kompression des Pumpvolumens beim Auftreten des Benutzers bei jedem Schritt und andererseits eine ausreichende Formstabilität bei Einwirken des Spritzdrucks beim Umspritzen mit dem Randsohlenbereich-Kunststoff erreicht werden kann.

Bei einer bevorzugten Ausführungsform wird eine Zwischensohle mit einer im Fersenbereich angeordneten Ausnehmung zur Aufnahme eines Balgs der Luftpumpvorrichtung bereitgestellt, wobei sich die Ausnehmung horizontal seitlich und an der Schuhrückseite bis zu einem Abstand von etwa 1 - 5 % der Länge des Schuhs vom Rand der Zwischensohle erstreckt, wobei der Balg durch die von der Unterseite des Sohlenabschnitts bzw. der Oberseite der Laufsohle abgedeckten Ausnehmung gebildet wird und wobei ein Abschnitt des wenigstens einen Luftansaugkanals und ein Abschnitt des wenigstens einen in den Schuhinnenraum mündenden Luftführungskanals in der Zwischensohle ausgebildet ist. Bei dieser bevorzugten Ausführungsform wird ein maximales Pumpvolumen bei noch ausreichendem Rückstellvermögen bei Entlastung durch Abheben des Schuhs nach dem Auftreten bei jedem Schritt erreicht.

Vorteilhafte und/oder bevorzugte Ausführungsformen der Erfindung sind in den Unteransprüchen gekennzeichnet.

Nachfolgend wird die Erfindung anhand von in den Zeichnungen dargestellten bevorzugten Ausführungsbeispielen näher erläutert. In den Zeichnungen zeigen:
Figur 1 eine Seitenansicht der Komponenten Schaft, Zwischensohle und Laufsohle eines nach einer ersten, bevorzugten Ausführungsform des erfindungsgemäßen Verfahrens herzustellenden Schuhs;
Figur 2 eine Ansicht der Zwischensohle gemäß Figur 1, bei der die von außen nicht sichtbaren, inneren Begrenzungslinien sichtbar gemacht sind;
Figuren 3A bis 3E Seitenansichten der Komponenten und des Schuhs gemäß Figur 1 in den verschiedenen Phasen der Herstellung nach dem ersten bevorzugten Verfahren;
Figur 4A eine Längsschnittansicht und Figur 4B eine Querschnittansicht eines nach dem in den Figuren 3A bis 3E veranschaulichten ersten bevorzugten Verfahren hergestellten Schuhs;
Figur 5 eine Seitenansicht der Komponenten Schaft, Zwischensohle und Laufsohle in der Herstellungsphase nach dem Verbinden von Zwischensohle und Laufsohle und vor dem Verbinden der Zwischensohle mit dem Schaft eines nach einer alternativen Variante des ersten bevorzugten Verfahrens hergestellten Schuhs;
Figur 6 eine Seitenansicht der Komponenten Schaft, Zwischensohle und Laufsohle eines nach einer zweiten, bevorzugten Ausführungsform des erfindungsgemäßen Verfahrens herzustellenden Schuhs;
Figur 7 eine Ansicht der Zwischensohle gemäß Figur 6, bei der die von außen nicht sichtbaren, inneren Begrenzungslinien sichtbar gemacht sind;
Figuren 8A bis 8E Seitenansichten der Komponenten und des Schuhs gemäß Figur 6 in den verschiedenen Phasen der Herstellung nach dem zweiten bevorzugten Verfahren;
Figur 9A eine Längsschnittansicht und Figur 9B eine Querschnittansicht eines nach dem in den Figuren 8A bis 8E veranschaulichten zweiten bevorzugten Verfahren hergestellten Schuhs;
Figur 10 eine Seitenansicht der Komponenten Schaft, Zwischensohle und Laufsohle in der Herstellungsphase nach dem Verbinden von Zwischensohle und Laufsohle und vor dem Verbinden der Zwischensohle mit dem Schaft eines nach einer alternativen Variante des zweiten bevorzugten Verfahrens hergestellten Schuhs;
Figuren 11A bis 11F Perspektivansichten der Komponenten eines Schuhs in den verschiedenen Phasen seiner Herstellung nach einer dritten Ausführungsform des erfindungsgemäßen Verfahrens; und
Figur 12 eine Unteransicht der Zwischensohle, wie sie in dem in den Figuren 11A bis 11F veranschaulichten Herstellungsverfahren verwendet wird.

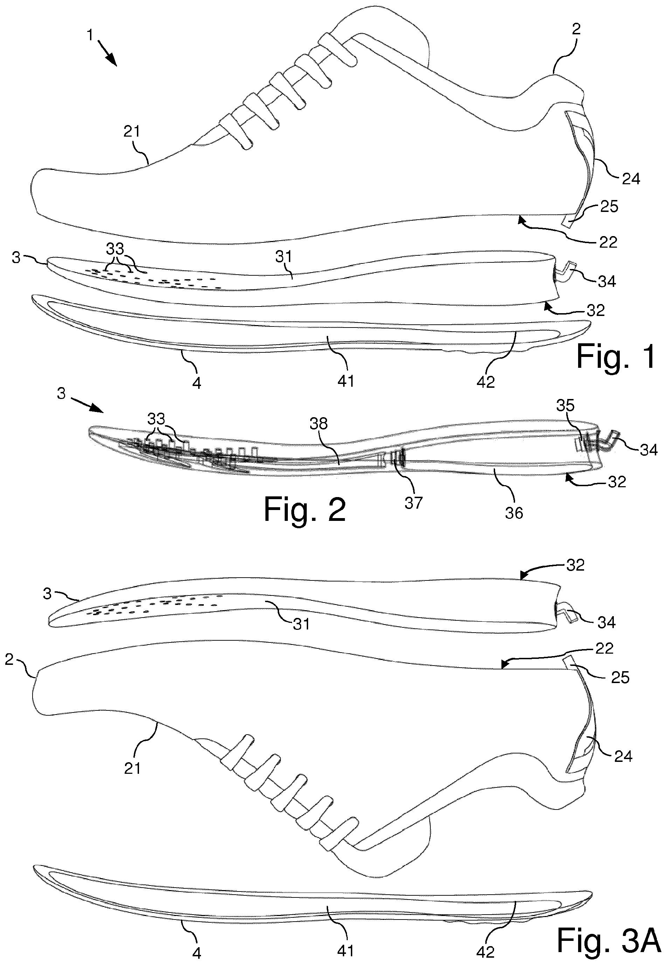

Anhand der Figuren 1 bis 4B soll eine erste Ausführungsform des erfindungsgemäßen Verfahrens zum Herstellen eines Schuhs mit einer im Fersenbereich angeordneten Luftpumpvorrichtung beschrieben werden.

Figur 1 zeigt eine schematische Seitenansicht von drei Grundkomponenten, aus denen ein Schuh 1 hergestellt wird, nämlich einen Schaft 2, eine Zwischensohle 3 und eine Laufsohle 4.

Der Schaft 2 umfasst einen Obermaterialabschnitt 21 und einen Sohlenabschnitt 22. Unter dem Sohlenabschnitt 22 soll hier derjenige Teil des Schafts verstanden werden, der dem Boden zugewandt ist und an dem die nachfolgend beschriebene Sohlenkonstruktion angebracht wird. Der Obermaterialabschnitt 21 ist dann der verbleibende Teil des Schafts 2. Der Sohlenabschnitt 22 umfasst üblicherweise eine Brandsohle und kann daneben noch weitere Sohlenschichten, beispielsweise im Inneren eingelegte Sohlen umfassen. Bei einigen Ausführungsformen kann auch auf eine separate Brandsohle verzichtet werden und beispielsweise das Leder des Schafts ausgehend von dem Obermaterialabschnitt unten um den Fuß herumgeführt werden, wie dies beispielsweise bei einem Mokassin der Fall ist.

Die Zwischensohle 3 ist vorzugsweise einstückig aus einem kompressiblen Kunststoffmaterial hergestellt und enthält an ihrer Unterseite 32 eine Ausnehmung 36, die in einer separaten Darstellung der Zwischensohle 3 in Figur 2, bei der die von außen nicht sichtbaren, inneren Kanten sichtbar gemacht sind, zu erkennen ist. Die in den Figuren 1 und 2 dargestellte Zwischensohle 3 enthält ferner Luftführungskanäle 38, die von der Ausnehmung 36 zu Öffnungen 33 an der Oberseite 31 der Zwischensohle 3 führen. Diese Luftführungskanäle 38 sind über ein Einwegventil 37 derart mit dem Hohlraum der Ausnehmung 36 verbunden, dass bei einer Kompression des Hohlraums die darin enthaltene Luft nur in Richtung der Luftführungskanäle 38 durch das Einwegventil 37 hindurch austreten kann. Ferner enthält die Zwischensohle 3 einen an der Rückseite des Schuhs an die Ausnehmung 36 angrenzenden Luftansaugkanal, der ebenfalls über ein Einwegventil 35 mit dem Hohlraum der Ausnehmung 36 verbunden ist. Diese Einwegventil 35 ist so ausgebildet, dass es die Luft lediglich in Richtung in den Hohlraum der Ausnehmung 36 hinein durchlässt. Das andere Ende des Luftansaugkanals weist ein Verbindungselement 34 auf.

Der hier nicht im Detail dargestellte Sohlenabschnitt 22 enthält im Vorderfußbereich Öffnungen, die sich von seiner Unterseite bis in den Innenraum des Schuhs 1 erstrecken und so angeordnet sind, dass sie mit den Öffnungen 33 an der Oberseite 31 der Zwischensohle 3 fluchten. Luft, die über das Einwegventil 37 aus der Ausnehmung 36 in die Luftführungskanäle 38 und weiter durch deren Öffnungen 33 hinaus gepresst wird, gelangt somit durch die Öffnungen in dem Sohlenabschnitt 22 des Schafts in den Innenraum des Schuhs 1. Der Schaft enthält außerdem einen Luftansaugkanal 24 mit einem Verbindungselement 25, das mit dem Verbindungselement 34 des Luftansaugkanals der Zwischensohle 3 bei der Befestigung der Zwischensohle 3 an dem Schaft 2 verbunden wird. Der Luftansaugkanal 24 enthält an seinem oberen Ende eine hier nicht im Detail dargestellte Luftansaugöffnung, die vorzugsweise mit einem Gitter oder einem grobmaschigem Gewebe überdeckt ist. Der Luftansaugkanal 24 kann an der Rückseite des Schafts 2 auch so gestaltet sein (beispielsweise mäanderförmig), dass die Luft beim Einsaugen in ihre Strömungsrichtung umgelenkt wird, bevor sie nach unten in die Zwischensohle geführt wird. Dieses Umlenken der angesaugten Luftströmung kann zum Abscheiden von in der Luft enthaltenen Wassertröpfchen und/oder Schmutzpartikeln ausgenutzt werden. Der Luftansaugkanal 24 kann auch mehrere parallel geführte Luftansaugkanäle umfassen. Bei dem in Figur 1 dargestellten Ausführungsbeispiel ist der Luftansaugkanal 24 an der Rückseite des Schafts 2 ausgebildet. Bei alternativen Ausführungsformen kann er auch an der Innen- oder Außenseite des Schafts 2 ausgebildet sein.

Eine dritte in Figur 1 dargestellte Schuhkomponente ist die Laufsohle 4, welche an ihrer Oberseite 41 eine hier durch den Rand 42 dargestellte Vertiefung aufweist, in die die Zwischensohle 3 eingepasst werden kann. Die Vertiefung dient hier der einfacheren Positionierung der Zwischensohle 3 in Bezug auf die Laufsohle 4. Das Material der Laufsohle 4 ist vorzugsweise ebenfalls ein Kunststoff- oder Gummimaterial, welches den Anforderungen an eine Laufsohle 4 angepasst ist, insbesondere eine hohe Abriebfestigkeit aufweist.

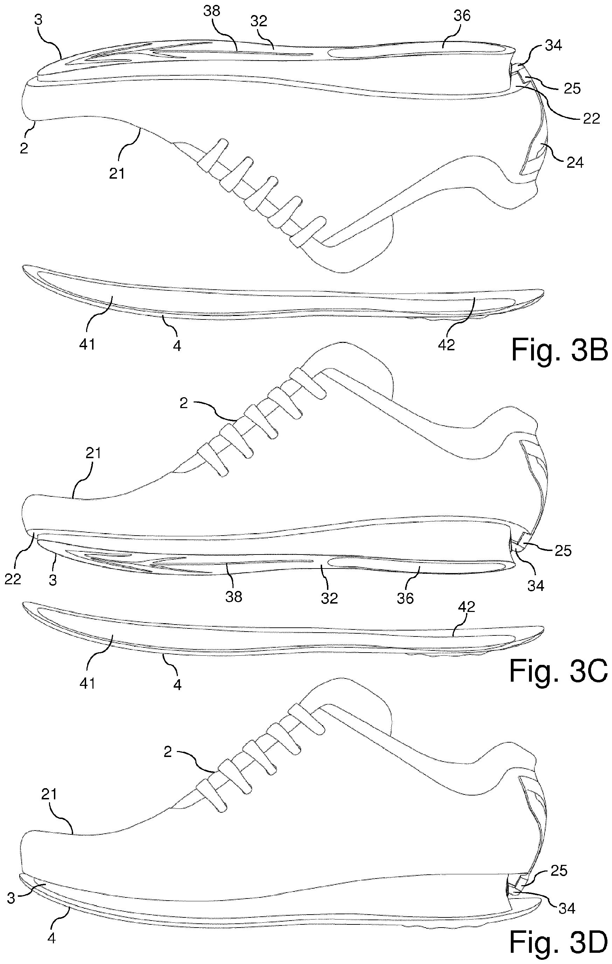

In den Figuren 3A bis 3E ist eine erste bevorzugte Ausführungsform eines Verfahrens zum Herstellen des Schuhs 1 aus den drei Schuhkomponenten Schaft 2, Zwischensohle 3 und Laufsohle 4 veranschaulicht. Bei der bevorzugten Vorgehensweise gemäß Figur 3A wird der Schaft 2 auf einem hier nicht dargestellten Leisten so positioniert, dass seine Unterseite, d. h. der Sohlenabschnitt 22, nach oben weist. Dann wird die Zwischensohle 3 von oben auf den Sohlenabschnitt 22 des Schafts 2 gesetzt und dabei positioniert, wobei die Verbindungselemente 34 und 25 des Luftansaugkanals miteinander verbunden werden. Das Ergebnis ist in Figur 3B gezeigt. Die Unterseite 32 der Zwischensohle 3 weist hier nach oben, so dass hier einerseits die Ausnehmung 36 und andererseits Ausnehmungen der Luftführungskanäle 38 zu erkennen sind. Die Zwischensohle 3 wird mit ihrer Oberseite 31 auf den Sohlenabschnitt 22 vorzugsweise aufgeklebt. Eine ganzflächige Klebeverbindung ist hier nicht erforderlich; beim Verkleben ist lediglich einerseits auf eine richtige Positionierung der Zwischensohle und andererseits auf ein Freihalten der Verbindungskanäle zwischen den Öffnungen 33 und dem Innenraum des Schuhs 1 zu achten. Die Laufsohle 4 wird - entweder bereits vor dem Befestigen der Zwischensohle auf dem Schaft 2 oder danach - in der in Figur 3B zu erkennenden Orientierung in ein hier nicht dargestelltes Bodenelement einer Spritzgießform eingelegt, in dem die Laufsohle 4 an ihrer Unterseite ganzflächig abgestützt wird.

Wie es in Figur 3C zu erkennen ist, wird der Schaft 2 mit der daran befestigten Zwischensohle 3 derart gedreht, dass die Unterseite 32 der Zwischensohle 3 der Oberseite 41 der Laufsohle 4 zugewandt ist. Anschließend wird der Schaft 2 mit der Zwischensohle 3 derart nach unten bewegt, dass die Zwischensohle 3 in der Vertiefung mit dem Rand 42 positioniert und an die Oberseite 41 der Laufsohle 4 gepresst wird. Dabei verschließt die Oberseite 41 der Laufsohle 4 die Ausnehmung 36 und die Ausnehmungen der Luftführungskanäle 38. Zu diesem Zweck ist zumindest derjenige Bereich der Oberfläche der Unterseite 32 der Zwischensohle 3, der die Ausnehmung 36 und die Ausnehmungen der Luftführungskanäle 38 umgibt, komplementär zu der gegenüberliegend angeordneten Oberfläche der Oberseite 41 der Laufsohle 4 ausgebildet, so dass der Hohlraum der Ausnehmung 36 und die Hohlräume der Ausnehmungen der Luftführungskanäle 38 allseitig abgedichtet werden, wenn die Unterseite 32 der Zwischensohle 3 auf die Oberseite 41 der Laufsohle 4 gepresst wird. Vor dem Anpressen der Unterseite 32 der Zwischensohle 3 auf die Oberseite 41 der Laufsohle 4 wird die Unterseite 32 und/oder die Oberseite 41 innerhalb der Vertiefung mit Klebstoff beschichtet. Die Klebverbindung zwischen der Unterseite 32 der Zwischensohle 3 und der Oberseite 41 der Laufsohle 4 umgibt die Ausnehmung 36 sowie die Ausnehmungen der Luftführungskanäle 38 vollständig, so dass keine Lücke zwischen der Zwischensohle 3 und der Laufsohle 4 verbleibt, die die Ausnehmung 36 oder die Luftführungskanäle 38 mit der Umgebung verbindet.

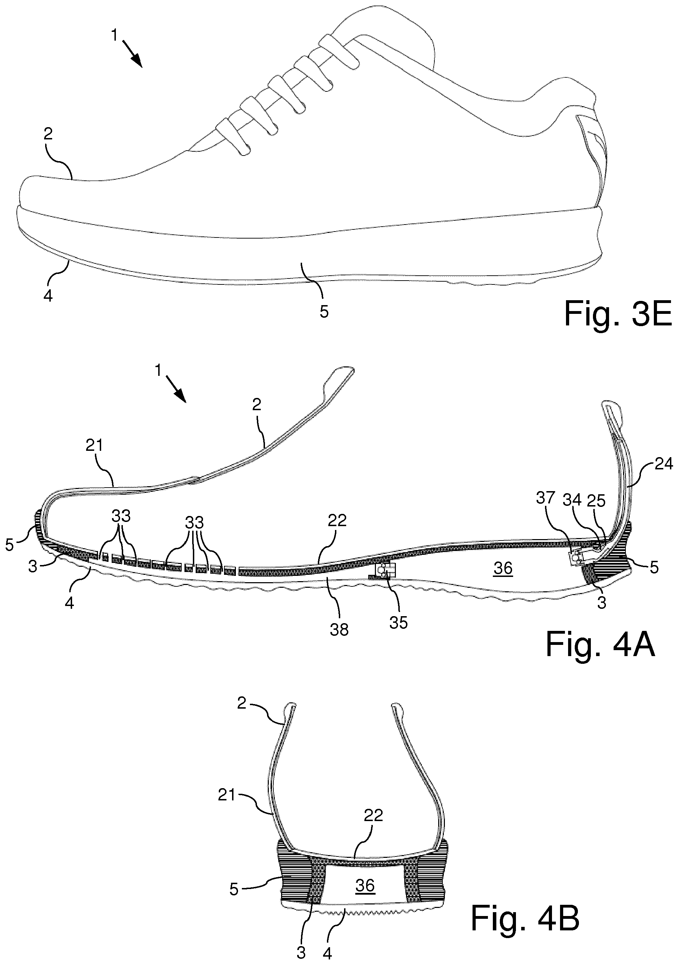

Das Ergebnis nach dem Verbinden der Zwischensohle 3 mit der Laufsohle 4 ist in Figur 3D dargestellt. Sowohl der äußere Rand der Laufsohle 4 als auch der Sohlenabschnitt des Schafts 2 überragen den Außenrand der Zwischensohle 3 derart, dass der Abstand zwischen dem Außenrand der Laufsohle und dem Außenrand der Zwischensohle zwischen etwa 5% und 20% der Länge des Schuhs liegt, beispielsweise bei etwa 10 bis 20 mm. Anschließend wird die in Figur 3D gezeigte Anordnung von einer Spritzgießform umschlossen und werden die nicht von der Zwischensohle 3 abgedeckten Oberflächenbereiche der Oberseite 41 der Laufsohle 4, die seitlichen Außenflächen der Zwischensohle 3 und die nicht von der Zwischensohle 3 abgedeckten Flächen des Sohlenbereichs 22 und angrenzende seitliche Oberflächenbereiche des Schafts 2 mit einem Randsohlenbereich-Kunststoff umspritzt, so dass die Laufsohle 4, die Zwischensohle 3 und der Schaft 2 miteinander fest verbunden werden. Das Ergebnis ist in Figur 3E dargestellt.

Die Figuren 4A und 4B zeigen schematische Schnittansichten durch den auf die oben beschriebene Weise hergestellten Schuh 1. Figur 4A zeigt eine Längsschnittansicht, die etwa mittig durch den Schuh hindurch geführt ist. Man erkennt den Schaft 2 mit dem Obermaterialabschnitt 21 und den Sohlenabschnitt 22 und die Zwischensohle 3 mit der nach unten offenen Ausnehmung 36, den nach unten offenen Ausnehmungen für die Luftführungskanäle 38, den Öffnungen 33, dem die Ausnehmung 36 mit den Luftführungskanälen 38 verbindenden Einwegventil 35 und dem ebenfalls über ein Einwegventil 37 mit der Ausnehmung 36 verbundenen Luftansaugkanal mit dem Verbindungselement 34. Man erkennt ferner den Ansaugkanal 24 mit seinem Verbindungselement 25, die Teil des Schafts 2 sind. An der Spitze und der Rückseite des Schuhs 1 sind in waagerechter Schraffur Teile des Randsohlenbereichs 5 zu erkennen, der die Laufsohle 4 mit der Zwischensohle 3 und dem Schaft 2 verbindet. Figur 4B zeigt eine Schnittansicht durch den Fersenbereich des Schuhs 1 quer zur Laufrichtung, wobei auch hier die Zwischensohle 3 mit der Ausnehmung 36, die durch die Laufsohle 4 verschlossen ist, der Schaft 2 mit dem Obermaterialabschnitt 21 und dem Sohlenabschnitt 22 und der Randsohlenbereich 5 zu erkennen sind.

Anhand der Figur 4A sei kurz auf die - als solche bekannte - Funktionsweise der Luftpumpvorrichtung eingegangen. Die nach unten offene Ausnehmung 36 der Zwischensohle 3, die unten durch die Laufsohle 4 verschlossen ist, bildet einen Hohlraum in der kompressiblen Zwischensohle 3. Wenn beim Laufen das Gewicht des Trägers des Schuhs 1 auf den Fersenbereich drückt, so wird der Hohlraum der Ausnehmung 36 durch Zusammenpressen der Zwischensohle 3 komprimiert. Die in dem Hohlraum der Ausnehmung 36 enthaltene Luft wird durch das Einwegventil 35 gepresst, während das Einwegventil 37 schließt. Die durch das Einwegventil 35 gedrückte Luft gelangt über die Luftführungskanäle 38 durch die Öffnungen 33 und die entsprechenden Öffnungen des Sohlenabschnitts 22 hindurch in das Innere des Schuhs 1 in dessen Zehen- oder Ballenbereich. Wenn der Träger des Schuhs 1 anschließend den Fuß entlastet und den Schuh 1 vom Untergrund abhebt, so bewirken die elastischen Rückstellkräfte des Materials der komprimierten Zwischensohle 3 und des Materials des komprimierten Randsohlenbereichs 5 ein Expandieren des Hohlraums der Ausnehmung 36. Aufgrund des dadurch entstehenden Unterdrucks in dem Hohlraum der Ausnehmung 36 schließt das Einwegventil 35, während das Einwegventil 37 öffnet. Dadurch wird Frischluft über den Luftansaugkanal 24 von einer (in Figur 4A nicht dargestellten) Ansaugöffnung am oberen Ende des Luftansaugkanals 24 eingesaugt und in den Hohlraum der Ausnehmung 36 geleitet. Mit dem nächsten Schritt des Trägers des Schuhs 1, bei dem der Träger des Schuhs 1 die Ferse wieder belastet, beginnt der beschriebene Prozess von vorn. Bei jedem Schritt wird somit Frischluft angesaugt und dann in den Schuhinnenraum gepumpt.

Das Kunststoffmaterial des Randsohlenbereichs 5 ist so gewählt, dass es gut auf den Oberflächen des Schafts 2, der Zwischensohle 3 und der Oberseite der Laufsohle 4 haftet. Ferner weist der Randsohlenbereich-Kunststoff im erhärteten Zustand eine gute Kompressibilität auf, wobei die Kompressibilität in Verbindung mit der Kompressibilität der Zwischensohle 3 so gewählt ist, dass bei normalem Auftreten des Trägers des Schuhs 1 während des Laufvorgangs eine möglichst vollständige Kompression des Hohlraums der Ausnehmung 36 erreicht wird. Andererseits ist der Kunststoff des Randsohlenbereichs 5 so gewählt, dass das Rückstellvermögen ausreicht, um innerhalb der kurzen Zeitspanne der Entlastung des Fußes während eines Schritts ein möglichst vollständiges Rückstellen der Form der Zwischensohle 3, d. h. eine möglichst vollständige Expansion des Hohlraums der Ausnehmung 36, zu erreichen.

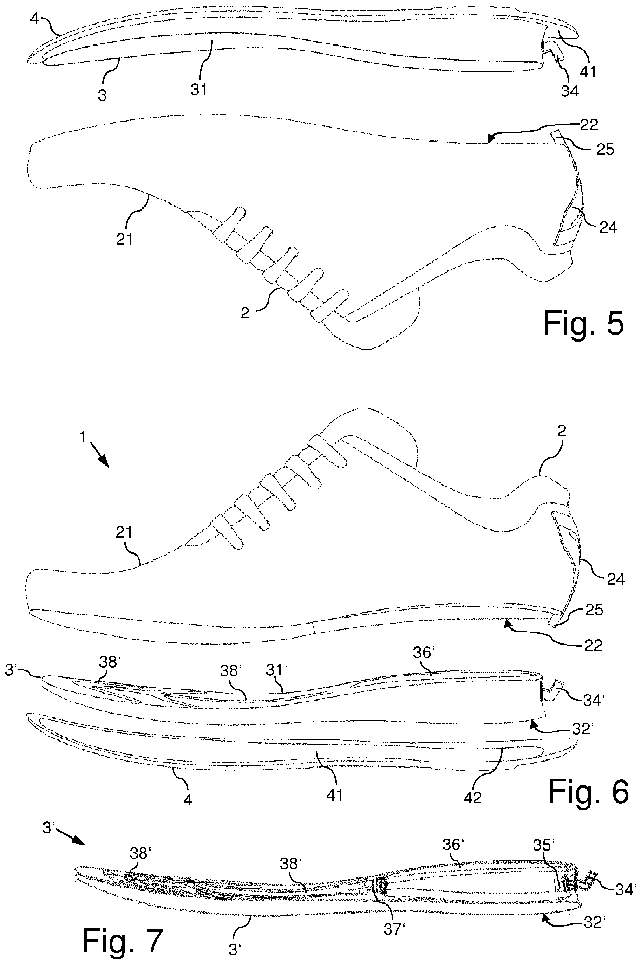

Figur 5 zeigt eine Phase der Herstellung eines Schuhs gemäß einer Abwandlung des in den Figuren 3A bis 3E veranschaulichten Herstellungsverfahrens. In Figur 5 ist zu erkennen, dass eine bereits auf der Oberseite der Laufsohle 4 aufgebrachte Zwischensohle 3 oberhalb eines Schafts 2 angeordnet ist, wobei die Unterseite des Sohlenabschnitts 22 des Schafts 2 nach oben weist. Bei dieser Ausführungsform des erfindungsgemäßen Verfahrens wird zunächst die Laufsohle 4 in einer Form bereitgestellt, dann die Zwischensohle 3 mit ihrer zur Laufsohle hin offenen Ausnehmung 36 auf die Oberseite 41 der Laufsohle 4 aufgeklebt, so dass der Hohlraum der Ausnehmung 36 allseitig umschlossen ist. Anschließend wird dieser Verbund aus Laufsohle 4 und Zwischensohle 3 auf der Unterseite des Sohlenabschnitts 22 befestigt, wobei - wie es in Figur 5 dargestellt ist - vorzugsweise eine Anordnung gewählt wird, bei der der auf einem Leisten aufgespannte Schaft 2 mit seiner Unterseite nach oben weist, um die Aufbringung des Verbunds aus Zwischensohle 3 und Laufsohle 4 auf den Schaft 2 zu erleichtern. Während des Befestigens dieses Verbunds aus Zwischensohle 3 und Laufsohle 4 mit dem Schaft 2 wird auch eine Verbindung zwischen dem Verbindungselement 34 und dem Verbindungselement 25 des Luftansaugkanals hergestellt.

Anhand der Figuren 6 bis 9B soll eine alternative Ausführungsform des erfindungsgemäßen Verfahrens zum Herstellen eines Schuhs mit einer im Fersenbereich angeordneten Luftpumpvorrichtung beschrieben werden. Bei dieser Ausführungsform wird eine Zwischensohle 3' verwendet, bei der die Ausnehmung 36' an der Oberseite der Zwischensohle 3' angeordnet und somit zum Sohlenabschnitt 22 des Schafts 2 hin offen ist.

Figur 6 zeigt eine schematische Seitenansicht der drei zu verbindenden Schuhkomponenten Schaft 2, Zwischensohle 3' und Laufsohle 4. Figur 7 zeigt eine Ansicht der Zwischensohle 3' gemäß Figur 6, bei der die von außen nicht sichtbaren, inneren Kanten und Begrenzungslinien sichtbar gemacht sind. Die Darstellungen der Figuren 6 und 7 entsprechen den Darstellungen der Figuren 1 und 2 der erstgenannten, bevorzugten Ausführungsform des erfindungsgemäßen Verfahrens, wobei gleiche Elemente mit gleichen Bezugsziffern versehen sind. Bei diesen gleichen Elementen kann auf die Beschreibung der Figuren 1 und 2 verwiesen werden. Unterschiede ergeben sich insbesondere durch die abweichende Gestaltung der Zwischensohle 3'. Diese Zwischensohle 3' weist eine an der Oberseite 31' angrenzende Ausnehmung 36' zur Aufnahme eines Balgs der Luftpumpvorrichtung auf. Dieser Balg der Luftpumpvorrichtung ist vorzugsweise kein separates Bauelement, sondern wird durch den Hohlraum der Ausnehmung 36' selbst gebildet. Bei einer weniger bevorzugten Ausführungsform kann auch in die Ausnehmung 36' ein separates Bauelement, insbesondere eine einen Hohlraum umschließende Kunststoffblase als Balg eingebracht werden. Weitere an die Oberseite 31' der Zwischensohle 3' angrenzende Ausnehmungen bilden Luftführungskanäle 38'. Der Sohlenabschnitt 22 des Schafts 2 weist wiederum Öffnungen auf, die den Innenraum des Schuhs 1 mit den Luftführungskanälen 38' verbinden, nachdem die Zwischensohle 3' auf der Unterseite des Schafts 2 befestigt worden ist.

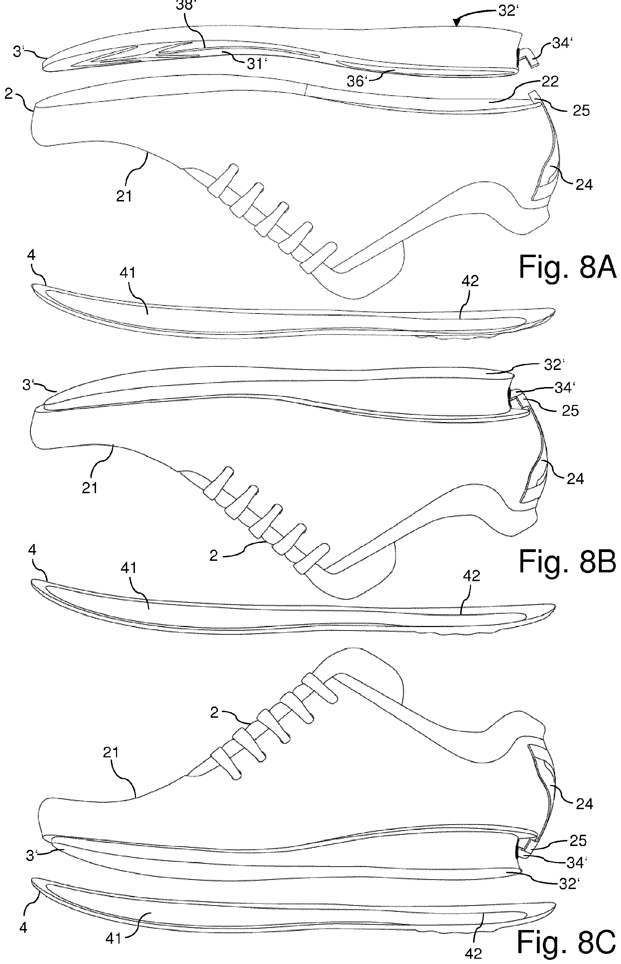

In den Figuren 8A bis 8E sind wiederum einzelne Phasen des Herstellungsverfahrens abgebildet. Wie es in Figur 8A gezeigt ist, wird die Laufsohle 4, vorzugsweise in einem (hier nicht gezeigten) Bodenelement einer Spritzgießform, bereitgestellt. Ferner wird der Schaft 2 auf einem (hier nicht dargestellten) Leisten bereitgestellt und so angeordnet, dass dessen Sohlenabschnitt 22 nach oben weist. Wie es in den Figuren 8A und 8B dargestellt ist, wird zunächst die Zwischensohle 3' auf dem Sohlenabschnitt 22 des Schafts 2 positioniert und aufgeklebt. Dabei weist die Oberseite 31' der Zwischensohle 3' eine Oberfläche mit einem ersten Oberflächenprofil und die an diese Oberfläche angrenzende Ausnehmung 36' zur Aufnahme des wenigstens einen Balgs der Luftpumpvorrichtung sowie Ausnehmungen zur Aufnahme der Luftführungskanäle 38' auf. Die Unterseite des Sohlenabschnitts 22 des Schafts 2 weist eine Oberfläche mit einem zweiten Oberflächenprofil auf, das zu dem ersten Oberflächenprofil zumindest teilweise derart komplementär ist, dass die komplementären Oberflächenbereiche des zweiten Oberflächenprofils des Sohlenabschnitts 22 und des ersten Oberflächenprofils der Zwischensohle 3' die wenigstens eine Ausnehmung 36' und die Ausnehmungen der Luftführungskanäle 38' allseitig umgeben, so dass die Ausnehmungen nach dem Aufkleben der Zwischensohle 3' auf den Sohlenabschnitt 22 des Schafts 2 allseitig verschlossen sind, d. h. keine Lücken zwischen der Oberseite 31' der Zwischensohle 3' und dem Sohlenabschnitt 22 verbleiben.

Beim Aufkleben der Zwischensohle 3' auf den Sohlenabschnitt 22 wird zugleich eine Verbindung zwischen dem Verbindungselement 34' und dem Verbindungselement 25 des schaftseitigen Teils des Luftansaugkanals 24 hergestellt. Die Montage der Zwischensohle 3' auf den Schaft 2 einschließlich der Verbindung der Verbindungselemente des Luftansaugkanals wird dadurch erleichtert, dass - wie bereits gesagt - der Schaft mit seiner Unterseite nach oben angeordnet wird.

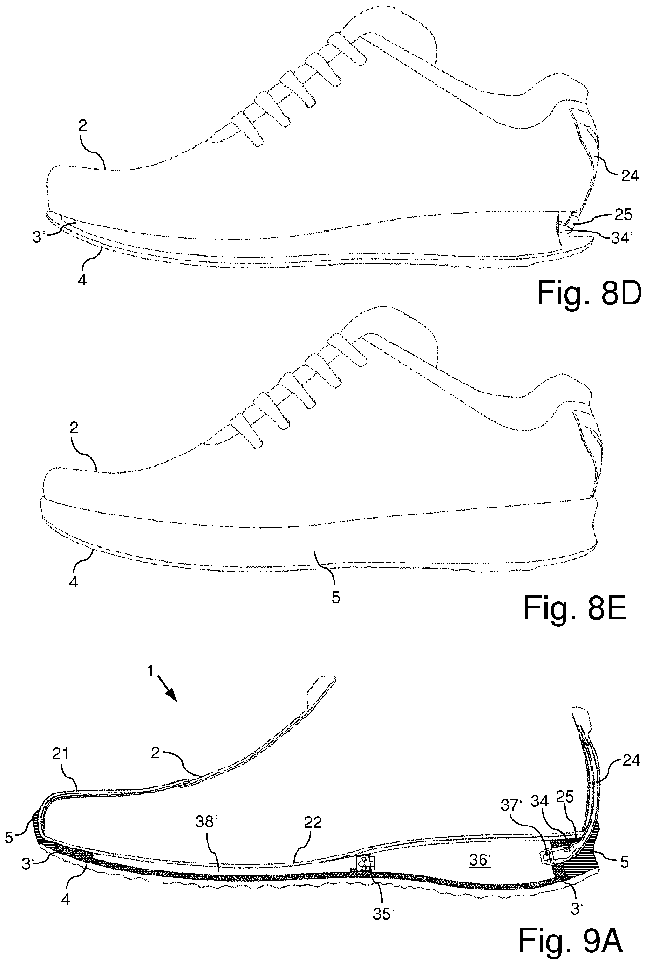

Nachdem die Zwischensohle 3' auf dem Sohlenabschnitt 22 des Schafts 2 aufgeklebt worden ist, wird der Leisten mit dem aufgespannten Schaft 2 gedreht, so dass die Unterseite 32' der Zwischensohle 3' der Oberseite 41 der Laufsohle 4 zugewandt ist. Dies ist in Figur 8C dargestellt. Anschließend wird die Unterseite 32' der Zwischensohle 3' derart auf die Oberseite 41 der Laufsohle 4 aufgesetzt, dass sie in der Vertiefung mit dem Rand 42 positioniert ist. Das Ergebnis ist in Figur 8D dargestellt. Vorzugsweise ist die Verbindung zwischen der Zwischensohle 3' und der Laufsohle 4 ebenfalls eine Klebverbindung, die allerdings nicht ganzflächig vorgesehen zu sein braucht. Sie dient lediglich der Fixierung der Laufsohle 4 an der Zwischensohle 3'. Nachdem der Schaft 2, die Zwischensohle 3' und die Laufsohle 4 miteinander verbunden sind, wie es in Figur 8D gezeigt ist, wird um den Schuh herum eine Spritzgießform geschlossen und wird anschließend das Kunststoffmaterial des Randsohlenbereichs 5 eingespritzt, so dass die nicht von der Zwischensohle 3' abgedeckten Oberflächenbereiche der Oberseite 41 der Laufsohle 4, die seitlichen Außenflächen der Zwischensohle 3' und die nicht von der Zwischensohle 3' abgedeckten Bereiche des Sohlenabschnitts 22 und angrenzende seitliche Oberflächenbereiche des Schafts 2 mit dem Randsohlenbereich-Kunststoff umspritzt werden. Das Ergebnis ist in Figur 8E dargestellt.

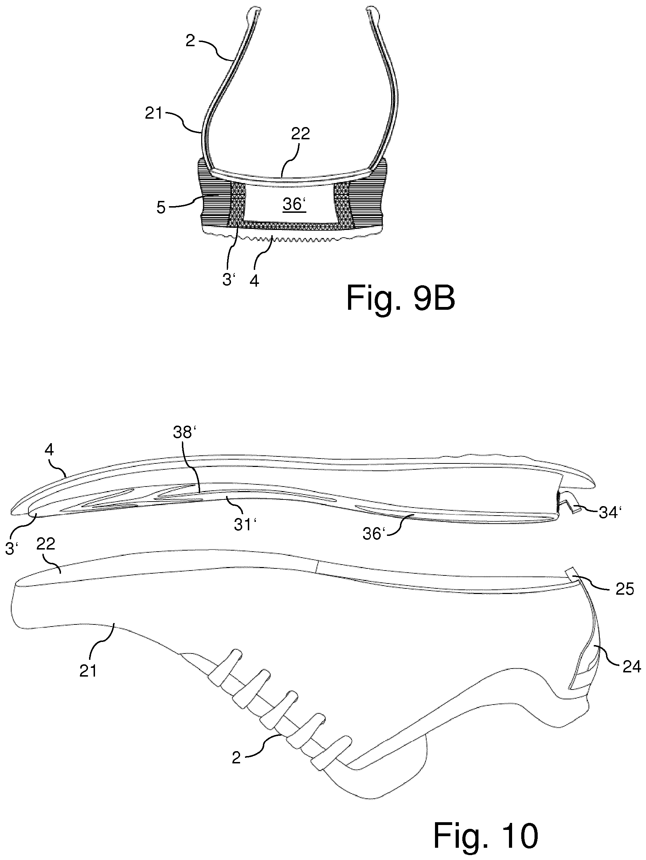

Die Figuren 9A und 9B zeigen wiederum schematische Schnittdarstellungen durch einen nach dem anhand der Figuren 8A bis 8E veranschaulichten Herstellungsverfahren hergestellten Schuh 1. Die Darstellungen der Figuren 9A und 9B entsprechen denen der Figuren 4A und 4B mit folgenden Abweichungen. Die Ausnehmung 36' zur Ausbildung des Balgs der Luftpumpeinrichtung und die Ausnehmungen für die Luftführungskanäle 38' sind hier zur Oberseite der Zwischensohle 3' hin geöffnet, so dass sie von dem Sohlenabschnitt 22 des Schafts 2 verschlossen sind. Die Luftführungskanäle 38' der Zwischensohle 3' grenzen hierbei unmittelbar an die Öffnungen in dem Sohlenabschnitt 22 des Schafts 2. Bei dieser Ausführungsform ist es vorzugsweise vorgesehen, dass der Sohlenabschnitt 22 eine Brandsohle umfasst, die im Fersenbereich über den den wenigstens einen Balg der Luftpumpvorrichtung bildenden Hohlraum der Ausnehmung 36' verstärkt und als biegesteife Druckplatte ausgebildet ist, die die Ausnehmung 36' vollständig überdeckt. Beispielsweise ist die Brandsohle des Sohlenabschnitts 22 in diesem Bereich durch eine starke Pappe oder eine biegesteife Kunststoffplatte überdeckt.

Figur 10 zeigt eine Phase im Herstellungsprozess eines Schuhs, der gemäß einer Abwandlung des anhand der Figuren 8A bis 8E beschriebenen Verfahrens hergestellt wird. Während bei der Herstellung gemäß den Figuren 8A bis 8E zunächst die Zwischensohle 3' auf dem Sohlenabschnitt 22 des Schafts 2 befestigt wurde, um anschließend diesen Verbund auf der Laufsohle 4 zu befestigen, wird bei der Ausführungsform gemäß Figur 10 zunächst die Zwischensohle 3' mit der Laufsohle 4 verbunden, um diesen Verbund anschließend auf dem Sohlenabschnitt 22 des Schafts 2 zu befestigen. Figur 10 zeigt hierbei die Phase, bei der die Zwischensohle 3' bereits mit der Laufsohle 4 verbunden ist und dieser Verbund oberhalb eines mit dem Sohlenabschnitt 22 nach oben weisenden Schaft 2 angeordnet ist. Hierbei braucht die Verbindung zwischen der Zwischensohle 3' und der Laufsohle 4 keine ganzflächige Klebverbindung zu sein; es genügt eine Fixierung der Zwischensohle 3' an der Laufsohle 4. Nach der in Figur 10 dargestellten Phase wird dann die Klebverbindung zwischen der Oberseite 31' der Zwischensohle 3' und der nach oben weisenden Unterseite des Sohlenabschnitts 22 hergestellt, wobei entweder die Oberseite 31' der Zwischensohle 3' oder die Unterseite des Sohlenabschnitts 22 oder beide Oberflächen zuvor mit Klebstoff beschichtet worden sind. Die Oberseite 31' der Zwischensohle 3' und die Unterseite des Sohlenabschnitts 22 weisen in den zu verbindenden Bereichen wiederum komplementäre Oberflächenprofile auf, so dass beim Verkleben keine Lücke zwischen der Oberseite 31' der Zwischensohle 3' und der Unterseite des Sohlenabschnitts 22 entstehen kann, der die Ausnehmungen in der Zwischensohle 3' mit der Umgebung verbindet.

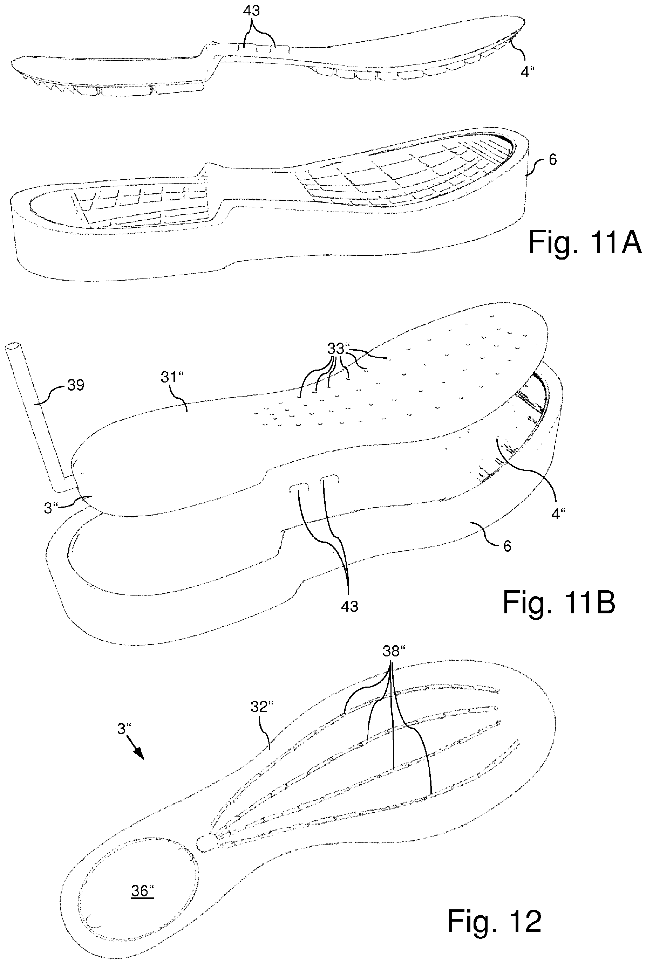

In den Figuren 11A bis 11F sind schematische Perspektivansichten der Komponenten eines Schuhs in den verschiedenen Phasen seiner Herstellung nach einer Abwandlung der anhand der Figuren 1 bis 4B beschriebenen ersten Ausführungsform des erfindungsgemäßen Verfahrens veranschaulicht, wobei allerdings bei dem Verfahren gemäß den Figuren 11A bis 11F zuerst die Zwischensohle 3", deren Unterseite Ausnehmungen aufweist, auf der in einem Bodenelement 6 einer Spritzgießform bereitgestellten Laufsohle 4" aufgebracht wird und danach der Schaft 2" auf diesem Verbund montiert wird.

Figur 11A zeigt zunächst die Bereitstellung der Laufsohle 4" durch Einlegen der vorgefertigten Laufsohle in das Bodenelement 6 einer Spritzgießform. Bei einer hier nicht dargestellten Ausführungsform kann auch die Laufsohle 4" durch Spritzgießen in dem Bodenelement 6 der Spritzgießform bereitgestellt werden, indem das Bodenelement 6 während dieses Spritzgießens oberseitig mit einer Formhälfte verschlossen wird, die dem Profil der Oberseite der herzustellenden Laufsohle 4" entspricht. In Figur 11A ist ferner zu erkennen, dass die bereitgestellte Laufsohle 4" an ihrer Oberseite zwei Positionierelemente 43 aufweist. Nachdem die Laufsohle 4" in dem Bodenelement der Spritzgießform bereitgestellt ist, wird eine vorgefertigte Zwischensohle 3" aufgelegt. Die Unterseite der Zwischensohle 3" weist zu den Positionierelementen 43 der Laufsohle 4" komplementäre Positionierelemente auf, so dass beim Auflegen der Zwischensohle 3" eine exakte Positionierung ermöglicht wird.

Figur 12 zeigt eine Unteransicht der in Figur 11B gezeigten Zwischensohle 3", wobei man in Figur 12 insbesondere die Ausnehmung 36" zur Ausbildung des Hohlraums des Balgs der Luftpumpvorrichtung und die Ausnehmungen für die Luftführungskanäle 38" erkennt. Die Zwischensohle 3" ist ferner mit einem Luftansaugkanal 39 ausgestattet.

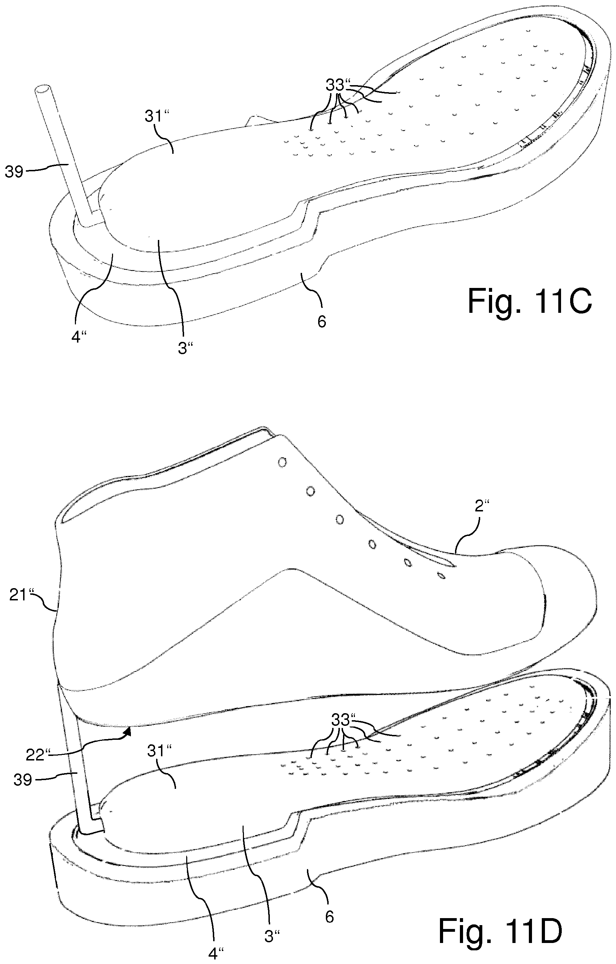

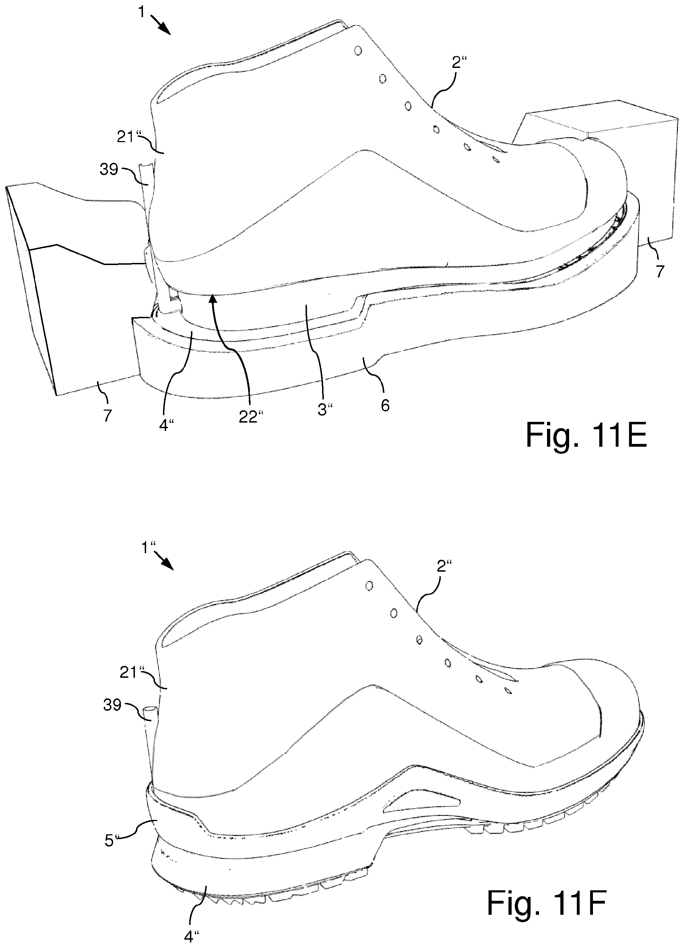

Figur 11C zeigt die Phase des Herstellungsprozesses nach dem Auflegen der Zwischensohle 3" auf die in dem Bodenelement 6 der Spritzgießform einliegende Zwischensohle 4". Nach dem Auflegen der Zwischensohle 3" wird, wie es in Figur 11 dargestellt ist, der vormontierte Schaft 2" aufgesetzt, wobei die Unterseite seines Sohlenabschnitts 22" auf die Oberseite 31" der Zwischensohle 3" aufgesetzt wird. Gemäß Figur 11E wird dann die hier schematisch dargestellte Spritzgießform mit den Seitenteilen 7 geschlossen, so dass anschließend die nicht von der Zwischensohle 3" abgedeckten Oberflächenbereiche der Oberseite der Laufsohle 4", die seitlichen Außenflächen der Zwischensohle 3" mit dem Ansaugkanal 39 und die nicht von der Zwischensohle 3" abgedeckten Bereiche der Unterseite des Sohlenabschnitts 22" mit den angrenzenden seitlichen Oberflächenbereichen des Schafts 2" mit einem Randsohlenbereich-Kunststoff umspritzt werden, um den Schaft 2", die Zwischensohle 3" und die Laufsohle 4" miteinander zu verbinden. Das Ergebnis dieser Verbindung ist in der Figur 11F veranschaulicht.

Wie bereits erwähnt, gestattet die Verwendung der Schuhkomponenten Schaft 2, Zwischensohle 3, Laufsohle 4 und Randsohlenbereich 5 eine Anpassung der für die Komponenten verwendeten Materialien an ihre jeweilige Funktion. Für die Zwischensohle 3 wird ein kompressibles (d.h. leicht komprimierbares) Material mit ausreichender Rückstellfähigkeit, beispielsweise ein PUR-Schaum verwendet. Auch für den Randsohlenbereich wird vorzugsweise ein kompressibles und rückstellfähiges PUR-Schaumstoffmaterial verwendet. Vorzugsweise weisen die Materialien der Zwischensohle 3 und des Randsohlenbereichs 5 eine Shore-A-Härte zwischen 40 und 60 Shore, vorzugsweise zwischen 45 und 55 Shore auf. Bei den oben beschriebenen Ausführungsformen wird der Balg der Luftpumpvorrichtung vorzugsweise durch den Hohlraum der Ausnehmung 36, abgedeckt durch die Unterseite des Sohlenabschnitts 22 oder die Oberseite 41 der Laufsohle 4, gebildet, ohne dass eine zusätzliche Kunststoff-Blase eingesetzt zu werden braucht. Selbstverständlich ist es aber bei alternativen Ausführungsformen denkbar, dass eine solche Kunststoffblase in den Hohlraum eingesetzt wird, was üblicherweise bei der Vormontage der Zwischensohle erfolgt.

## Patentansprüche

1. Verfahren zur Herstellung eines Schuhs mit einer im Fersenbereich angeordneten Luftpumpvorrichtung mit wenigstens einem Balg, in welchen wenigstens ein Luftansaugkanal mündet und mit dem wenigstens ein in den Schuhinnenraum mündender Luftführungskanal verbunden ist, wobei ein Schaft (2; 2") mit einem Obermaterialabschnitt (21; 21") und einem Sohlenabschnitt (22; 22") mit einer Unterseite, eine Zwischensohle (3; 3'; 3") mit einer Oberseite (31; 31'; 31") und einer Unterseite (32; 32'; 32") und eine Laufsohle (4; 4") mit einer Oberseite (41) bereitgestellt werden, wobei
entweder die Unterseite (32; 32") der Zwischensohle (3; 3") eine Oberfläche mit einem ersten Oberflächenprofil und wenigstens eine an diese Oberfläche angrenzende Ausnehmung (36; 36") zur Ausbildung wenigstens eines Hohlraums für den wenigstens einen Balg der Luftpumpvorrichtung aufweist, und die Oberseite (41) der Laufsohle (4; 4") eine Oberfläche mit einem zweiten Oberflächenprofil aufweist, das zu dem ersten Oberflächenprofil zumindest teilweise derart komplementär ist, dass die komplementären Oberflächenbereiche des zweiten Oberflächenprofils der Laufsohle (4; 4") und des ersten Oberflächenprofils der Zwischensohle (3; 3") die wenigstens eine Ausnehmung (36; 36") allseitig umgeben,
oder die Oberseite (31') der Zwischensohle (3') eine Oberfläche mit einem ersten Oberflächenprofil und wenigstens eine an diese Oberfläche angrenzende Ausnehmung (36') zur Ausbildung wenigstens eines Hohlraums für den wenigstens einen Balg der Luftpumpvorrichtung aufweist, und die Unterseite des Sohlenabschnitts (22) des Schafts (2) eine Oberfläche mit einem zweiten Oberflächenprofil aufweist, das zu dem ersten Oberflächenprofil zumindest teilweise derart komplementär ist, dass die komplementären Oberflächenbereiche des zweiten Oberflächenprofils des Sohlenabschnitts (22) und des ersten Oberflächenprofils der Zwischensohle (3') die wenigstens eine Ausnehmung (36') allseitig umgeben, wobei die horizontale Ausdehnung der Oberseite (41)
der Laufsohle (4; 4'; 4") und die horizontale Ausdehnung des Sohlenabschnitts (22; 22") des Schafts (2; 2") größer sind als die horizontale Ausdehnung der Zwischensohle (3; 3'; 3"), so dass die Zwischensohle (3; 3'; 3") derart
zentriert zwischen der Laufsohle (4; 4'; 4") und dem Schaft (2; 2") positioniert werden kann, dass die
Laufsohle (4; 4'; 4") und der Schaft (2; 2") den Außenrand der Zwischensohle (3; 3'; 3") allseitig überragen,
wobei zum Verbinden des Schafts (2; 2"), der Zwischensohle (3; 3'; 3") und der Laufsohle (4; 4'; 4")
a) zunächst entweder
a1-1) die Zwischensohle (3; 3'; 3") zentriert auf die Unterseite des Sohlenabschnitts (22; 22") des Schafts (2; 2") aufgebracht wird und
a1-2) der Schaft (2; 2") mit der aufgebrachten Zwischensohle (3; 3'; 3") auf die Oberseite (41) der Laufsohle (4; 4'; 4") gedrückt wird, wobei die Laufsohle (4; 4'; 4") zuvor in einem Bodenelement (6) einer Spritzgießform bereitgestellt wird,
oder
a2-1) die Zwischensohle (3; 3'; 3") zentriert auf die Oberseite (41) der Laufsohle (4; 4'; 4") aufgebracht wird und
a2-2) die Laufsohle (4; 4'; 4") mit der aufgebrachten Zwischensohle (3; 3'; 3") auf die Unterseite des Schafts (2; 2") aufgebracht wird, und
wobei die komplementären Oberflächenbereiche des ersten Oberflächenprofils der Oberseite (31; 31'; 31") bzw. der Unterseite (32; 32'; 32") der Zwischensohle (3; 3'; 3") und des zweiten Oberflächenprofils der Unterseite des Sohlenabschnitts (22; 22") bzw. der Oberseite (41) der Laufsohle (4; 4'; 4") verklebt werden, so dass der wenigstens eine Hohlraum der wenigstens einen Ausnehmung (36; 36'; 36") vollständig umschlossen ist, und
b) danach der Schaft (2; 2"), die Zwischensohle (3; 3'; 3") und die Laufsohle (4; 4'; 4") von einer Spritzgießform umschlossen werden und die nicht von der Zwischensohle (3; 3'; 3") abgedeckten Oberflächenbereiche der Oberseite (41) der Laufsohle (4; 4'; 4"), die seitlichen Außenflächen der Zwischensohle (3; 3'; 3") und die Unterseite und angrenzende seitliche Oberflächenbereiche des Schafts (2; 2") mit einem Randsohlenbereich-Kunststoff umspritzt werden, um unter Ausbildung eines Randsohlenbereichs (5; 5") die Laufsohle (4; 4'; 4"), die Zwischensohle (3; 3'; 3") und den Schaft (2; 2") miteinander zu verbinden.

2. Verfahren nach Anspruch 1, **dadurch gekennzeichnet, dass** der Spritzdruck im Schritt b) in Abhängigkeit von dem Material der Zwischensohle (3; 3'; 3") so gewählt wird, dass der wenigstens eine Hohlraum der wenigstens einen Ausnehmung (36; 36'; 36") nicht oder nur unwesentlich komprimiert wird.

3. Verfahren nach Anspruch 1 oder 2, **dadurch gekennzeichnet, dass** im Schritt a1-1) bzw. im Schritt a2-2) der Schaft (2) auf einem Leisten so positioniert wird, dass die Unterseite des Sohlenabschnitts (22) nach oben weist.

4. Verfahren nach einem der Ansprüche 1 - 3, **dadurch gekennzeichnet, dass** im Schritt a1-1) bzw. im Schritt a2-1) die Zwischensohle (3; 3'; 3") zentriert aufgebracht wird, indem sie mit Hilfe von Markierungen oder Vorsprüngen (43) auf der Unterseite des Sohlenabschnitts (22) des Schafts bzw. auf der Oberseite (41) der Laufsohle (4; 4'; 4") positioniert wird.

5. Verfahren nach einem der Ansprüche 1 - 4, **dadurch gekennzeichnet, dass**
ein Schaft (2) bereitgestellt wird, der einen sich ausgehend von dem Sohlenabschnitt (22) entlang seines Obermaterialabschnitts (21) erstreckenden ersten Luftansaugkanal (24) mit einer beabstandet vom Sohlenabschnitt (22) angeordneten Luftansaugöffnung und einem an dem Sohlenabschnitt (22) angeordneten ersten Verbindungselement (25) aufweist,
eine Zwischensohle (3; 3') bereitgestellt wird, die an ihrer Oberseite (31; 31') ein mit einem zweiten Luftansaugkanal der Luftpumpvorrichtung verbundenes zweites Verbindungselement (34; 34') aufweist, und
die Schritte a1-1) und a1-2) ausgeführt werden, wobei im Schritt a1-1) das erste (25) und das zweite (34; 34') Verbindungselement miteinander verbunden werden, um den zweiten Luftansaugkanal der Zwischensohle (3; 3') mit dem ersten Luftansaugkanal (24) des Schafts (2) zu verbinden.

6. Verfahren nach Anspruch 5, **dadurch gekennzeichnet, dass** ein Schaft (2) bereitgestellt wird, der einen sich entlang seines Fersenbereichs erstreckenden ersten Luftansaugkanal (24) aufweist.

7. Verfahren nach Anspruch 5 oder 6, **dadurch gekennzeichnet, dass** die Oberseite (31') der Zwischensohle (3') die Oberfläche mit dem ersten Oberflächenprofil und die Unterseite des Sohlenabschnitts (22) des Schafts (2) die Oberfläche mit dem zweiten Oberflächenprofil aufweist, so dass die komplementären Oberflächenbereiche des ersten Oberflächenprofils der Oberseite (31') der Zwischensohle (3') und des zweiten Oberflächenprofils der Unterseite des Sohlenabschnitts (22) im Schritt a1-1) verklebt werden.

8. Verfahren nach Anspruch 7, **dadurch gekennzeichnet, dass** der Sohlenabschnitt (22) des Schafts (2) eine Brandsohle umfasst, die im Fersenbereich über der den wenigstens einen Balg der Luftpumpvorrichtung enthaltenden wenigstens einen Ausnehmung (36') verstärkt und als biegesteife Druckplatte ausgebildet ist, die die wenigstens eine Ausnehmung (36') überdeckt.

9. Verfahren nach Anspruch 5 oder 6, **dadurch gekennzeichnet, dass** die Unterseite (32) der Zwischensohle (3) die Oberfläche mit dem ersten Oberflächenprofil und die Oberseite (41) der Laufsohle (4) die Oberfläche mit dem zweiten Oberflächenprofil aufweist, so dass die komplementären Oberflächenbereiche des ersten Oberflächenprofils der Unterseite (32) der Zwischensohle (3) und des zweiten Oberflächenprofils der Oberseite (41) der Laufsohle (4) im Schritt a1-2) verklebt werden, wenn der Schaft (2) mit der aufgebrachten Zwischensohle (3) auf die Oberseite (41) der Laufsohle (4) gedrückt wird.

10. Verfahren nach Anspruch 9, **dadurch gekennzeichnet, dass** im Schritt a1-1) die Zwischensohle (3) auf die Unterseite des Sohlenabschnitts (22) aufgeklebt wird.

11. Verfahren nach Anspruch 9 oder 10, **dadurch gekennzeichnet, dass** die Laufsohle (4) in dem Bodenelement (6) der Spritzgießform bereitgestellt wird, indem die Laufsohle (4) in dem Bodenelement (6) durch Spritzgießen oder Gießen hergestellt wird.

12. Verfahren nach einem der Ansprüche 1 - 11, **dadurch gekennzeichnet, dass** eine Laufsohle (4; 4'; 4") bereitgestellt wird, die derart allseitig über den Außenrand der Zwischensohle (3; 3'; 3") übersteht, dass der Abstand zwischen dem Außenrand der Laufsohle (4; 4'; 4") und dem Außenrand der Zwischensohle (3; 3'; 3") zwischen 5 % und 20 % der Länge des Schuhs (1; 1") liegt.

13. Verfahren nach einem der Ansprüche 1 - 12, **dadurch gekennzeichnet, dass** eine Zwischensohle (3; 3'; 3") bereitgestellt wird, die aus einem Kunststoffschaum mit einer Shore-A-Härte zwischen 40 und 60 Shore besteht.

14. Verfahren nach einem der Ansprüche 1 - 13, **dadurch gekennzeichnet, dass** eine Zwischensohle (3; 3'; 3") mit einer im Fersenbereich angeordneten Ausnehmung (36; 36') zur Ausbildung eines Balgs der Luftpumpvorrichtung bereitgestellt wird,
wobei sich die Ausnehmung (36; 36') horizontal seitlich und an der Schuhrückseite bis zu einem Abstand von etwa 1 - 5 % der Länge des Schuhs (1; 1") vom Rand der Zwischensohle (3; 3'; 3") erstreckt,
wobei der Balg durch die von der Unterseite des Sohlenabschnitts (22; 22") bzw. der Oberseite (41) der Laufsohle (4; 4'; 4") abgedeckten Ausnehmung (36; 36') gebildet wird und
wobei ein Abschnitt des wenigstens einen Luftansaugkanals und ein Abschnitt des wenigstens einen in den Schuhinnenraum mündenden Luftführungskanals in der Zwischensohle (3; 3'; 3") ausgebildet ist.

## Claims

1. A method for producing a shoe comprising an air pump device arranged in the heel region, the air pump device comprising at least one bellows, into which at least one air intake duct opens and to which at least one air-guiding duct which opens into the interior of the shoe is connected, wherein an upper (2; 2") having an upper material section (21; 21") and a sole section (22; 22") having a lower face, a midsole (3; 3'; 3") having an upper face (31; 31'; 31") and a lower face (32; 32'; 32"), and an outsole (4; 4") having an upper face (41) are provided, wherein
either the lower face (32; 32") of the midsole (3; 3") has a surface having a first surface profile and at least one recess (36; 36") adjacent to this surface for forming at least one cavity for the at least one bellows of the air pump device, and the upper face (41) of the outsole (4; 4") has a surface having a second surface profile which is complementary to the first surface profile at least in part such that the complementary surface regions of the second surface profile of the outsole (4; 4") and the first surface profile of the midsole (3; 3") surround the at least one recess (36; 36") on all sides,
or the upper face (31') of the midsole (3') has a surface having a first surface profile and at least one recess (36') adjacent to this surface for forming at least one cavity for the at least one bellows of the air pump device, and the lower face of the sole section (22) of the upper (2) has a surface having a second surface profile which is complementary to the first surface profile at least in part such that the complementary surface regions of the second surface profile of the sole section (22) and the first surface profile of the midsole (3') surround the at least one recess (36') on all sides,
wherein the horizontal extension of the upper face (41) of the outsole (4; 4'; 4") and the horizontal extension of the sole section (22; 22") of the upper (2; 2") are greater than the horizontal extension of the midsole (3; 3'; 3") such that the midsole (3; 3'; 3") can be positioned so as to be centered between the outsole (4; 4'; 4") and the upper (2; 2") such that the outsole (4; 4'; 4") and the upper (2; 2") protrude beyond the outer edge of the midsole (3; 3'; 3") on all sides,
wherein, for connecting the upper (2; 2"), the midsole (3; 3'; 3") and the outsole (4; 4'; 4"),
a) first either
a1-1) the midsole (3; 3'; 3") is applied in a centered manner to the lower face of the sole section (22; 22") of the upper (2; 2") and
a1-2) the upper (2; 2") having the applied midsole (3; 3'; 3") is pressed onto the upper face (41) of the outsole (4; 4'; 4"), the outsole (4; 4'; 4") previously being provided in a base element (6) of an injection mold,
or
a2-1) the midsole (3; 3'; 3") is applied in a centered manner to the upper face (41) of the outsole (4; 4'; 4") and
a2-2) the outsole (4; 4'; 4") having the applied midsole (3; 3'; 3") is applied to the lower face of the upper (2; 2"), and
wherein the complementary surface regions of the first surface profile of the upper face (31; 31'; 31") or the lower face (32; 32'; 32"), respectively, of the midsole (3; 3'; 3") and the second surface profile of the lower face of the sole section (22; 22") or the upper face (41) of the outsole (4; 4'; 4"), respectively, are adhered such that the at least one cavity of the at least one recess (36; 36') is completely enclosed, and
b) then the upper (2; 2"), the midsole (3; 3'; 3") and the outsole (4; 4'; 4") are enclosed by an injection mold and the surface regions of the upper face (41) of the outsole (4; 4'; 4") not covered by the midsole (3; 3'; 3"), the lateral outer surfaces of the midsole (3; 3'; 3") and the lower face and adjacent lateral surface regions of the upper (2; 2") are overmolded with an edge sole region plastic in order to interconnect the outsole (4; 4'; 4"), the midsole (3; 3'; 3") and the upper (2; 2") by forming an edge sole region (5; 5").

2. The method according to claim 1, **characterized in that** the injection pressure in step b) is selected depending on the material of the midsole (3; 3'; 3") such that the at least one cavity of the at least one recess (36; 36') is not compressed or is only insignificantly compressed.

3. The method according to claim 1 or 2, **characterized in that**, in step a1-1) or in step a2-2), respectively, the upper (2) is positioned on a last such that the lower face of the sole section (22) points upwards.

4. The method according to any of claims 1 to 3, **characterized in that**, in step a1-1) or in step a2-1), respectively, the midsole (3; 3'; 3") is applied in a centered manner by it being positioned using markings or projections on the lower face of the sole section (22) of the upper or on the upper face (41) of the outsole (4; 4'; 4").

5. The method according to any of claims 1 to 4, **characterized in that**
an upper (2) is provided which has a first air intake duct (24) extending from the sole section (22) along its upper material section (21) comprising an air intake opening spaced apart from the sole section (22) and a first connecting element (25) arranged on the sole section (22),
a midsole (3; 3') is provided which has, on its upper face (31; 31'), a second connecting element (34; 34') connected to a second air intake duct of the air pump device, and
steps a1-1) and a1-2) are carried out, wherein, in step a1-1), the first (25) and the second (34; 34') connecting element are interconnected in order to connect the second air intake duct of the midsole (3; 3') to the first air intake duct (24) of the upper (2).

6. The method according to claim 5, **characterized in that** an upper (2) is provided which has a first air intake duct (24) extending along its heel region.

7. The method according to claim 5 or 6, **characterized in that** the upper face (31') of the midsole (3') comprises the surface having the first surface profile and the lower face of the sole section (22) of the upper (2) comprises the surface having the second surface profile, such that the complementary surface regions of the first surface profile of the upper face (31') of the midsole (3') and the second surface profile of the lower face of the sole section (22) are adhered in step a1-1).

8. The method according to claim 7, **characterized in that** the sole section (22) of the upper (2) comprises an insole which is reinforced in the heel region above the at least one recess (36') containing the at least one bellows of the air pump device and is designed as a rigid pressure plate which covers the at least one recess (36').

9. The method according to claim 5 or 6, **characterized in that** the lower face (32) of the midsole (3) comprises the surface having the first surface profile and the upper face (41) of the outsole (4) comprises the surface having the second surface profile, such that the complementary surface regions of the first surface profile of the lower face (32) of the midsole (3) and the second surface profile of the upper face (41) of the outsole (4) are adhered in step a1-2) when the upper (2) having the applied midsole (3) is pressed onto the upper face (41) of the outsole (4).

10. The method according to claim 9, **characterized in that**, in step a1-1), the midsole (3) is adhered to the lower face of the sole section (22).

11. The method according to claim 9 or 10, **characterized in that** the outsole (4) is provided in the base element (6) of the injection mold by the outsole (4) being produced in the base element (6) by injection molding or casting.

12. The method according to any of claims 1 to 11, **characterized in that** an outsole (4; 4'; 4") is provided which projects beyond the outer edge of the midsole (3; 3'; 3") on all sides such that the distance between the outer edge of the outsole (4; 4'; 4") and the outer edge of the midsole (3; 3'; 3") is between 5% and 20% of the length of the shoe (1; 1").

13. The method according to any of claims 1 to 12, **characterized in that** a midsole (3; 3'; 3") is provided which consists of a plastics foam having a Shore A hardness of between 40 and 60 Shore.

14. The method according to any of claims 1 to 13, **characterized in that** a midsole (3; 3'; 3") is provided comprising a recess (36; 36') arranged in the heel region for receiving a bellows of the air pump device,
wherein the recess (36; 36') extends horizontally laterally and extends, at the back of the shoe, by a distance of approximately 1-5% of the length of the shoe (1; 1") from the edge of the midsole (3; 3'; 3"),
wherein the bellows are formed by the recess (36; 36') that is covered by the lower face of the sole section (22; 22") or the upper face (41) of the outsole (4; 4'; 4") and
wherein a section of the at least one air intake duct and a section of the at least one air-guiding duct opening into the interior of the shoe are formed in the midsole (3; 3'; 3") .

## Revendications

1. Procédé, destiné à fabriquer une chaussure, pourvue d'un dispositif de pompage d'air placé dans la zone du talon, doté d'au moins un soufflet, dans lequel débouche au moins un canal d'aspiration d'air et avec lequel est relié au moins un canal de guidage d'air débouchant dans l'espace intérieur de la chaussure, une tige (2 ; 2") pourvue d'une partie de matière supérieure (21 ; 21") et d'une partie de semelle (22 ; 22") dotée d'une face inférieure, une semelle intermédiaire (3 ; 3' ; 3") dotée d'une face supérieure (31 ; 31' ; 31") et d'une face inférieure (32 ; 32' ; 32") et une semelle d'usure (4 ; 4") dotée d'une face supérieure (41) étant mises à disposition,
soit la face inférieure (32 ; 32") de la semelle intermédiaire (3 ; 3") comportant une surface dotée d'un premier profil superficiel et d'au moins un évidement (36 ; 36") adjacent à ladite surface, pour créer au moins une cavité creuse pour l'au moins un soufflet du dispositif de pompage d'air, et la face supérieure (41) de la semelle d'usure (4 ; 4") comportant une surface dotée d'un deuxième profil superficiel, qui est complémentaire au moins en partie au premier profil superficiel, de telle sorte que les zones superficielles complémentaires du deuxième profil superficiel de la semelle d'usure (4 ; 4") et du premier profil superficiel de la semelle intermédiaire (3 ; 3") entourent de toutes parts l'au moins un évidement (36 ; 36"),
ou la face supérieure (31') de la semelle intermédiaire (3') comportant une surface dotée d'un premier profil superficiel et au moins un évidement (36') adjacent à ladite surface, pour créer au moins une cavité creuse pour l'au moins un soufflet du dispositif de pompage d'air, et la face inférieure de la partie de semelle (22) de la tige (2) comportant une surface dotée d''un deuxième profil superficiel, qui est complémentaire au moins en partie au premier profil superficiel, de telle sorte que les zones superficielles complémentaires du deuxième profil superficiel de la partie de semelle (22) et du premier profil superficiel de la semelle intermédiaire (3') entourent de toutes parts l'au moins un évidement (36'),
l'extension horizontale de la face supérieure (41) de la semelle d'usure (4 ; 4' ; 4") et l'extension horizontale de la partie de semelle (22 ; 22") de la tige (2 ; 2") étant supérieures à l'extension horizontale de la semelle intermédiaire (3 ; 3' ; 3"), de sorte que la semelle intermédiaire (3 ; 3' ; 3") puisse être positionnée de manière centrée entre la semelle d'usure (4 ; 4' ; 4") et la tige (2 ; 2"), de sorte que la semelle d'usure (4 ; 4' ; 4") et la tige (2 ; 2") débordent de toute part au-delà du bord extérieur de la semelle intermédiaire (3 ; 3' ; 3"),
pour relier la tige (2 ; 2"), de la semelle intermédiaire (3 ; 3' ; 3") et la semelle d'usure (4 ; 4' ; 4")
a) dans un premier temps
a1-1) soit la semelle intermédiaire (3 ; 3' ; 3") étant appliquée de manière centrée sur la face inférieure de la partie de semelle (22 ; 22") de la tige (2 ; 2") et
a1-2) la tige (2 ; 2") avec la semelle intermédiaire (3 ; 3' ; 3") appliquée étant pressée sur la face supérieure (41) de la semelle d'usure (4 ; 4' ; 4"), la semelle d'usure (4 ; 4' ; 4") étant mise à disposition préalablement dans un élément de fond inférieur (6) d'un moule d'injection
ou
a2-1) la semelle intermédiaire (3 ; 3' ; 3") étant appliquée de manière centrée sur la face supérieure (41) de la semelle d'usure (4 ; 4' ; 4") et
a2-2) la semelle d'usure (4 ; 4' ; 4") avec la semelle intermédiaire (3 ; 3' ; 3") appliquée étant appliquée sur la face inférieure de la tige (2 ; 2"), et
les zones superficielles complémentaires du premier profil superficiel de la face supérieure (31 ; 31' ; 31") ou de la face inférieure (32 ; 32' ; 32") de la semelle intermédiaire (3 ; 3' ; 3") et du deuxième profil superficiel de la face inférieure de la partie de semelle (22 ; 22") ou de la face supérieure (41) de la semelle d'usure (4 ; 4' ; 4") étant collées l'une sur l'autre, de sorte que l'au moins une cavité creuse de l'au moins un évidement (36 ; 36' ; 36") soit totalement entourée, et
b) ensuite, la tige (2 ; 2"), la semelle intermédiaire (3 ; 3' ; 3") et la semelle d'usure (4 ; 4' ; 4") étant entourées par un moule d'injection et les zones superficielles de la face supérieure (41) de la semelle d'usure (4 ; 4' ; 4") non recouvertes par la semelle intermédiaire (3 ; 3' ; 3"), les surfaces extérieures latérales de la semelle intermédiaire (3 ; 3' ; 3") et la face inférieure et des zones superficielles latérales adjacentes de la tige (2 ; 2") étant entourées par injection d'une matière plastique destinée à une zone marginale de semelle (5 ; 5"), pour relier entre elles la semelle d'usure (4 ; 4' ; 4"), la semelle intermédiaire (3 ; 3' ; 3") et la tige (2 ; 2").

2. Procédé selon la revendication 1, **caractérisé en ce qu'**on sélectionne la pression d'injection dans l'étape b) en fonction de la matière de la semelle intermédiaire (3 ; 3' ; 3"), de sorte que l'au moins une cavité creuse de l'au moins un évidement (36 ; 36' ; 36") ne soit pas comprimée ou seulement de manière insignifiante.

3. Procédé selon la revendication 1 ou 2, **caractérisé en ce que** dans l'étape a1-1), respectivement dans l'étape a2-2), on positionne la tige (2) sur un tasseau de telle sorte que la face inférieure de la partie de semelle (22) soit dirigée vers le haut.

4. Procédé selon l'une quelconque des revendications 1 à 3, **caractérisé en ce que** dans l'étape a1-1) ou dans l'étape a2-1), on applique de manière centrée la semelle intermédiaire (3 ; 3' ; 3") en la positionnant à l'aide de marquages ou de saillies (43) sur la face inférieure de la partie de semelle (22) de la tige ou sur la face supérieure (41) de la semelle d'usure (4 ; 4' ; 4").

5. Procédé selon l'une quelconque des revendications 1 à 4, **caractérisé**
**en ce qu'**on met à disposition une tige (2) qui comporte un premier canal d'aspiration d'air (24) qui s'étend à partir de la partie de semelle (22) le long de sa partie de matière supérieure (21), doté d'un orifice d'aspiration d'air placé à un écart de la partie de semelle (22) et d'un premier élément de liaison (25) placé sur la partie de semelle (22),
**en ce qu'**on met à disposition une semelle intermédiaire (3 ; 3'), qui sur sa face supérieure (31 ; 31') comporte un deuxième élément de liaison (34 ; 34') relié avec un deuxième canal d'aspiration d'air du dispositif de pompage d'air, et
**en ce qu'**on réalise les étapes a1-1) et a1-2), dans l'étape a1-1) étant reliés l'un à l'autre le premier (25) et le deuxième (34 ; 34') éléments de liaison, pour relier le deuxième canal d'aspiration d'air de la semelle intermédiaire (3 ; 3') avec le premier canal d'aspiration d'air (24) de la tige (2).

6. Procédé selon la revendication 5, **caractérisé en ce qu'**on met à disposition une tige (2) qui comporte un premier canal d'aspiration d'air (24) qui s'étend le long de sa zone de talon.

7. Procédé selon la revendication 5 ou 6, **caractérisé en ce que** la face supérieure (31') de la semelle intermédiaire (3') comporte la surface dotée du premier profil superficiel et la face inférieure de la partie de semelle (22) de la tige (2) comporte la surface dotée du deuxième profil superficiel, de sorte qu'on colle dans l'étape a1-1) les zones superficielles complémentaires du premier profil superficiel de la face supérieure (31') de la semelle intermédiaire (3') et du deuxième profil superficiel de la face inférieure de la partie de semelle (22).

8. Procédé selon la revendication 7, **caractérisé en ce que** la partie de semelle (22) de la tige (2) comprend une semelle intérieure, qui dans la zone du talon renforce l'au moins un évidement (36') contenant l'au moins un soufflet du dispositif de pompage d'air et qui est conçue sous la forme d'une plaque de pression rigide à la flexion, qui recouvre l'au moins un évidement (36').

9. Procédé selon la revendication 5 ou 6, **caractérisé en ce que** la face inférieure (32) de la semelle intermédiaire (3) comporte la surface dotée du premier profil superficiel et la face supérieure (41) de la semelle d'usure (4) comporte la surface dotée du deuxième profil superficiel, de sorte qu'on colle dans l'étape a1-2) les zones superficielles complémentaires du premier profil superficiel de la face inférieure (32) de la semelle intermédiaire (3) et du deuxième profil superficiel de la face supérieure (41) de la semelle d'usure (4) lorsqu'on presse la tige (2) avec la semelle intermédiaire (3) appliquée sur la face supérieure (41) de la semelle d'usure (4).

10. Procédé selon la revendication 9, **caractérisé en ce que** dans l'étape a1-1), on colle la semelle intermédiaire (3) sur la face inférieure de la partie de semelle (22) a.

11. Procédé selon la revendication 9 ou 10, **caractérisé en ce qu'**on met à disposition la semelle d'usure (4) dans l'élément de fond inférieur (6) du moule d'injection en fabriquant la semelle d'usure (4) dans l'élément de fond inférieur (6) par moulage par injection.

12. Procédé selon l'une quelconque des revendications 1 à 11, **caractérisé en ce qu'**on met à disposition une semelle d'usure (4 ; 4' ; 4") qui déborde de toutes parts au-delà du bord extérieur de la semelle intermédiaire (3 ; 3' ; 3"), de telle sorte que l'écart entre le bord extérieur de la semelle d'usure (4 ; 4' ; 4") et le bord extérieur de la semelle intermédiaire (3 ; 3' ; 3") se situe entre 5 % et 20 % de la longueur de la chaussure (1 ; l").

13. Procédé selon l'une quelconque des revendications 1 à 12, **caractérisé en ce qu'**on met à disposition une semelle intermédiaire (3 ; 3' ; 3") qui est constituée d'une mousse de matière plastique faisant preuve d'une dureté Shore-A comprise entre 40 et 60 shore.

14. Procédé selon l'une quelconque des revendications 1 à 13, **caractérisé en ce qu'**on met à disposition une semelle intermédiaire (3 ; 3' ; 3") pourvue d'un évidement (36 ; 36') placé dans la zone du talon, pour créer un soufflet du dispositif de pompage d'air,
l'évidement (36 ; 36') s'étendant à l'horizontale, latéralement et sur la face arrière de la chaussure jusqu'à un écart d'environ 1 à 5 % de la longueur de la chaussure (1 ; 1") à partir du bord de la semelle intermédiaire (3 ; 3' ; 3"),
le soufflet étant formé par l'évidement (36 ; 36') recouvert par la face inférieure de la partie de semelle (22 ; 22") ou par la face supérieure (41) de la semelle d'usure (4 ; 4' ; 4") et
une partie de l'au moins un canal d'aspiration d'air débouchant dans l'espace intérieure de la chaussure étant conçue dans la semelle intermédiaire (3 ; 3' ; 3") .
